# EUROPEAN PATENT APPLICATION

(11) **EP 4 683 407 A1**
(43) Date of publication of application: **21.01.2026**
(21) Application number: 24774059.0
(22) Date of filing: 18.03.2024
(51) Int. Cl.: H04W 72/0446

(54) **COMMUNICATION METHOD AND APPARATUS**

(30) Priority: 23.03.2023 CN 202310355879; 07.04.2023 CN 202310385288
(71) Applicant: Huawei Technologies Co., Ltd., Shenzhen, Guangdong 518129 (CN)
(72) Inventor: KUANG, Yiru, Shenzhen, Guangdong 518129 (CN); ZHANG, Li, Shenzhen, Guangdong 518129 (CN); XU, Haibo, Shenzhen, Guangdong 518129 (CN)
(74) Representative: Körber, Martin Hans
(86) International application number: PCT/CN2024/082132
(87) International publication number: WO 2024/193494

(57) **Abstract**

This application provides a communication method and apparatus. The method includes: A terminal device sends a first message to a network device, where the first message indicates a plurality of time units expected by the terminal device, the plurality of time units include M conflicting time units, and M is an integer greater than or equal to 2. The first message includes first indication information, and the first indication information indicates to retain a part of the M time units, or the first indication information indicates to retain all of the M time units. According to the method disclosed in this application, whether the first indication information exists indicates to the network device that all or a part of the conflicting time units are to be retained, to avoid discarding of a time unit that can be used, and avoid a waste of resources and a reduction in a system throughput caused by existence of a time unit that cannot be used.

## Description

This application claims priority to Chinese Patent Application No. 202310355879.0, filed with the China National Intellectual Property Administration on March 23, 2023 and entitled "METHOD AND APPARATUS FOR INDICATING TO RETAIN OR DISCARD MULTI-SIM GAP", and to Chinese Patent Application No. 202310385288.8, filed with the China National Intellectual Property Administration on April 7, 2023 and entitled "COMMUNICATION METHOD AND APPARATUS", both of which are incorporated herein by reference in their entireties.

### TECHNICAL FIELD

This application relates to the communication field, and more specifically, to a communication method and apparatus.

### BACKGROUND

In a mobile communication system, a terminal device may send a UE assistance information (UE assistance information) message to a network device, to request the network device to configure a multi-sim gap (gap) expected or recommended by the terminal device. However, when a conflict occurs between configured multi-sim gaps, a case in which a multi-sim gap that can be used does not exist, a case in which a multi-sim gap that cannot be used exists, or another case may be caused, causing a waste of resources and a reduction in a system throughput.

### SUMMARY

This application provides a communication method and apparatus, to ensure resource utilization, reduce a waste of resources, and improve a system throughput.

According to a first aspect, a communication method is provided. The method may be performed by a terminal device, or may be performed by a chip or a circuit used for the terminal device. This is not limited in this application. For ease of description, an example in which the method is performed by the terminal device is used below for description.

The method includes: The terminal device sends a first message to a network device, where the first message indicates a plurality of time units expected by the terminal device, the plurality of time units include M conflicting time units, and M is an integer greater than or equal to 2. If the first message includes first indication information, the first indication information indicates to retain a part of the M time units; or if the first message does not include first indication information, it indicates to retain the M time units. The terminal device receives configuration information from the network device, where the configuration information is determined based on the first message.

According to a second aspect, a communication method is provided. The method may be performed by a terminal device, or may be performed by a chip or a circuit used for the terminal device. This is not limited in this application. For ease of description, an example in which the method is performed by the terminal device is used below for description.

The method includes: The terminal device sends a first message to a network device, where the first message indicates a plurality of time units expected by the terminal device, the plurality of time units include M conflicting time units, and M is an integer greater than or equal to 2. The first message includes first indication information, and the first indication information indicates to retain a part of the M time units, or the first indication information indicates to retain all of the M time units. The terminal device receives configuration information from the network device, where the configuration information is determined based on the first message.

With reference to the first aspect, in some implementations of the first aspect, the M time units include N groups of conflicting time units, each of the N groups of time units includes a plurality of time units, and N is an integer greater than or equal to 1. If the first message includes the first indication information, the first indication information indicates to retain a part of time units in each of P groups of time units, and the P groups of time units are a part or all of the N groups of time units.

With reference to the second aspect, in some implementations of the second aspect, the M time units include N groups of conflicting time units, each of the N groups of time units includes a plurality of time units, and N is an integer greater than or equal to 1. The first indication information further indicates to retain a part of time units in each of P groups of time units, and the P groups of time units are a part or all of the N groups of time units.

With reference to the first aspect or the second aspect, in some implementations, that the first indication information indicates to retain the part of the M time units includes: The first indication information indicates to retain a part of the plurality of time units expected by the terminal device, or indicates to retain a part of the M time units.

With reference to the first aspect or the second aspect, in some implementations, that the first indication information indicates to retain the part of the M time units includes: The first indication information indicates to retain a part of the M time units, where the part of time units are time units with high priorities or time units with small periodicities.

With reference to the first aspect or the second aspect, in some implementations, that the first indication information indicates to retain the part of the M time units includes: The first indication information indicates that coexistence of a first part of time units in the M time units and a second part of time units that conflict with the first part of time units in the M time units is not allowed.

With reference to the first aspect or the second aspect, in some implementations, the first indication information includes identifiers of the first part of time units and identifiers of the second part of time units.

With reference to the first aspect or the second aspect, in some implementations, the first indication information includes second indication information and third indication information, the second indication information corresponds to the first part of time units, and the third indication information corresponds to the second part of time units. Values of the second indication information and the third indication information are both a first value, and the first value indicates that the coexistence of the first part of time units and the second part of time units is not allowed.

With reference to the first aspect, in some implementations of the first aspect, the first indication information includes second indication information and third indication information, the second indication information corresponds to the first part of time units, and the third indication information corresponds to the second part of time units. If the first message includes the second indication information and the third indication information, it indicates that the coexistence of the first part of time units and the second part of time units is not allowed.

With reference to the first aspect or the second aspect, in some implementations, that the first indication information indicates to retain the part of the M time units includes: The first indication information includes identifiers of a part of time units to be retained in the M time units; or the first indication information includes identifiers of another part of time units other than the part of time units in the M time units. In other words, the first indication information includes identifiers of a part of time units to be discarded in the M time units.

With reference to the first aspect or the second aspect, in some implementations, the first indication information includes second indication information and third indication information, the second indication information corresponds to a first part of time units in the M time units, and the third indication information corresponds to a second part of time units that conflict with the first part of time units in the M time units. That the first indication information indicates to retain the part of the M time units includes: If a value of the second indication information is a third value, it indicates to retain the first part of time units; or if a value of the second indication information is a fourth value, it indicates to discard the first part of time units; and if a value of the third indication information is the third value, it indicates to retain the second part of time units; or if a value of the third indication information is the fourth value, it indicates to discard the second part of time units.

With reference to the first aspect or the second aspect, in some implementations, the first indication information includes second indication information and third indication information, the second indication information corresponds to a first part of time units in the M time units, and the third indication information corresponds to a second part of time units that conflict with the first part of time units in the M time units. That the first indication information indicates to retain the part of the M time units includes: When a value of the second indication information is a third value and a value of the third indication information is a fourth value, it indicates to retain the first part of time units, and indicates not to retain or indicates to discard the second part of time units; or when a value of the second indication information is a fourth value and a value of the third indication information is a third value, it indicates to retain the second part of time units, and indicates not to retain or indicates to discard the first part of time units.

With reference to the first aspect, in some implementations of the first aspect, the first indication information includes second indication information and third indication information, the second indication information corresponds to a first part of time units in the M time units, and the third indication information corresponds to a second part of time units that conflict with the first part of time units in the M time units. That the first indication information indicates to retain the part of the M time units includes: If the first message does not include the second indication information, it indicates to retain the first part of time units; or if the first message includes the second indication information, it indicates to discard the first part of time units; and if the first message does not include the third indication information, it indicates to retain the second part of time units; or if the first message includes the third indication information, it indicates to discard the second part of time units.

With reference to the first aspect, in some implementations of the first aspect, the first indication information includes second indication information and third indication information, the second indication information corresponds to a first part of time units in the M time units, and the third indication information corresponds to a second part of time units that conflict with the first part of time units in the M time units. That the first indication information indicates to retain the part of the M time units includes: If the first message includes the second indication information, and does not include the third indication information, it indicates not to retain the first part of time units, and indicates to retain the second part of time units; or if the first message does not include the second indication information, and includes the third indication information, it indicates to retain the first part of time units, and indicates not to retain the second part of time units.

With reference to the second aspect, in some implementations of the second aspect, the first indication information includes second indication information and third indication information, the second indication information corresponds to a first part of time units in the M time units, and the third indication information corresponds to a second part of time units that conflict with the first part of time units in the M time units. That the first indication information indicates to retain the part of the M time units includes: If the first message includes the second indication information, and does not include the third indication information, it indicates not to retain the first part of time units, and indicates to retain the second part of time units; or if the first message does not include the second indication information, and includes the third indication information, it indicates to retain the first part of time units, and indicates not to retain the second part of time units.

With reference to the first aspect or the second aspect, in some implementations, that the first indication information indicates to retain the part of the M time units includes: When priorities of a first part of time units in the M time units are the same as priorities of a second part of time units that conflict with the first part of time units in the M time units, the first indication information indicates to retain the first part of time units, and indicates not to retain the second part of time units; or the first indication information indicates not to retain the first part of time units, and indicates to retain the first part of time units.

With reference to the first aspect or the second aspect, in some implementations, before that the terminal device sends the first message to the network device, the method further includes: The terminal device receives a second message from the network device, where the second message indicates that the terminal device is allowed to send the first message to the network device.

With reference to the first aspect or the second aspect, in some implementations, that the first indication information indicates to retain all of the M time units includes:

The first indication information indicates that coexistence of all of the M time units is allowed.

With reference to the first aspect or the second aspect, in some implementations, the first indication information includes identifiers of all of the M time units.

With reference to the first aspect or the second aspect, in some implementations, the first indication information includes second indication information and third indication information, the second indication information corresponds to a first time unit in all the time units, and the third indication information corresponds to a second time unit other than the first time unit in all the time units. Values of the second indication information and the third indication information are both a fifth value, and the fifth value indicates that coexistence of the first time unit and the second time unit is allowed.

With reference to the first aspect or the second aspect, in some implementations, the first indication information includes second indication information and third indication information, the second indication information corresponds to a first time unit in all the time units, and the third indication information corresponds to a second time unit other than the first time unit in all the time units. That the first indication information indicates to retain all of the M time units includes: Values of the second indication information and the third indication information are both a sixth value, and the sixth value indicates to retain the first time unit and the second time unit.

According to a third aspect, a communication method is provided. The method may be performed by a network device, or may be performed by a chip or a circuit used for the network device. This is not limited in this application. For ease of description, an example in which the method is performed by the network device is used below for description.

The method includes: The network device receives a first message from a terminal device, where the first message indicates a plurality of time units expected by the terminal device, the plurality of time units include M conflicting time units, and M is an integer greater than or equal to 2. If the first message includes first indication information, the first indication information indicates to retain a part of the M time units; or if the first message does not include first indication information, it indicates to retain the M time units. The network device determines configuration information based on the first message. The network device sends the configuration information to the terminal device.

According to a fourth aspect, a communication method is provided. The method may be performed by a network device, or may be performed by a chip or a circuit used for the network device. This is not limited in this application. For ease of description, an example in which the method is performed by the network device is used below for description.

The method includes: The network device receives a first message from a terminal device, where the first message indicates a plurality of time units expected by the terminal device, the plurality of time units include M conflicting time units, and M is an integer greater than or equal to 2. The first message includes first indication information, and the first indication information indicates to retain a part of the M time units, or the first indication information indicates to retain all of the M time units. The network device determines configuration information based on the first message. The network device sends the configuration information to the terminal device.

In the third aspect or the fourth aspect, for other specific implementations of the network device and beneficial effects of some implementations, respectively and correspondingly refer to related descriptions of the first aspect or the second aspect. Details are not described herein again.

According to a fifth aspect, a communication method is provided. The method may be performed by a terminal device, or may be performed by a chip or a circuit used for the terminal device. This is not limited in this application. For ease of description, an example in which the method is performed by the terminal device is used below for description.

The method includes: The terminal device sends a first message to a network device, where the first message indicates a plurality of time units expected by the terminal device, the plurality of time units include M conflicting time units, and M is an integer greater than or equal to 2. If the first message does not include first indication information, the first indication information indicates to retain a part of the M time units; or if the first message includes first indication information, it indicates to retain the M time units, or indicates to retain a part of the M time units. The terminal device receives configuration information from the network device, where the configuration information is determined based on the first message.

According to a sixth aspect, a communication method is provided. The method may be performed by a network device, or may be performed by a chip or a circuit used for the network device. This is not limited in this application. For ease of description, an example in which the method is performed by the network device is used below for description.

The method includes: The network device receives a first message from a terminal device, where the first message indicates a plurality of time units expected by the terminal device, the plurality of time units include M conflicting time units, and M is an integer greater than or equal to 2. If the first message does not include first indication information, the first indication information indicates to retain a part of the M time units; or if the first message includes the first indication information, it indicates to retain the M time units. The network device determines configuration information based on the first message. The network device sends the configuration information to the terminal device.

According to a seventh aspect, a communication apparatus is provided. The communication apparatus includes: a transceiver unit, configured to send a first message to a network device, where the first message indicates a plurality of time units expected by a terminal device, the plurality of time units include M conflicting time units, and M is an integer greater than or equal to 2. If the first message includes first indication information, the first indication information indicates to retain a part of the M time units; or if the first message does not include first indication information, it indicates to retain the M time units. The transceiver unit is further configured to receive configuration information from the network device, where the configuration information is determined based on the first message.

The transceiver unit may perform receiving and sending in the first aspect, and a processing unit may perform processing other than receiving and sending in the first aspect.

According to an eighth aspect, a communication apparatus is provided. The communication apparatus includes: a transceiver unit, configured to send a first message to a network device, where the first message indicates a plurality of time units expected by a terminal device, the plurality of time units include M conflicting time units, and M is an integer greater than or equal to 2. The first message includes first indication information, and the first indication information indicates to retain a part of the M time units, or the first indication information indicates to retain all of the M time units. The transceiver unit is further configured to receive configuration information from the network device, where the configuration information is determined based on the first message.

The transceiver unit may perform receiving and sending in the second aspect, and a processing unit may perform processing other than receiving and sending in the second aspect.

According to a ninth aspect, a communication apparatus is provided. The communication apparatus includes: a transceiver unit, configured to receive a first message from a terminal device, where the first message indicates a plurality of time units expected by the terminal device, the plurality of time units include M conflicting time units, and M is an integer greater than or equal to 2, where if the first message includes first indication information, the first indication information indicates to retain a part of the M time units; or if the first message does not include first indication information, it indicates to retain the M time units; and a processing unit, configured to determine configuration information based on the first message. The transceiver unit is further configured to send the configuration information to the terminal device.

The transceiver unit may perform receiving and sending in the third aspect, and the processing unit may perform processing other than receiving and sending in the third aspect.

According to a tenth aspect, a communication apparatus is provided. The communication apparatus includes: a transceiver unit, configured to receive a first message from a terminal device, where the first message indicates a plurality of time units expected by the terminal device, the plurality of time units include M conflicting time units, and M is an integer greater than or equal to 2, where the first message includes first indication information, and the first indication information indicates to retain a part of the M time units, or the first indication information indicates to retain all of the M time units; and a processing unit, configured to determine configuration information based on the first message. The transceiver unit is further configured to send the configuration information to the terminal device.

The transceiver unit may perform receiving and sending in the fourth aspect, and the processing unit may perform processing other than receiving and sending in the fourth aspect.

According to an eleventh aspect, a communication apparatus is provided. The communication apparatus includes: a transceiver unit, configured to send a first message to a network device, where the first message indicates a plurality of time units expected by a terminal device, the plurality of time units include M conflicting time units, and M is an integer greater than or equal to 2. If the first message does not include first indication information, the first indication information indicates to retain a part of the M time units; or if the first message includes first indication information, it indicates to retain the M time units, or indicates to retain a part of the M time units. The transceiver unit is further configured to receive configuration information from the network device, where the configuration information is determined based on the first message.

The transceiver unit may perform receiving and sending in the fifth aspect, and the processing unit may perform processing other than receiving and sending in the fifth aspect.

According to a twelfth aspect, a communication apparatus is provided. The communication apparatus includes: a transceiver unit, configured to receive, by a network device, a first message from a terminal device, where the first message indicates a plurality of time units expected by the terminal device, the plurality of time units include M conflicting time units, and M is an integer greater than or equal to 2, where if the first message does not include first indication information, the first indication information indicates to retain a part of the M time units; or if the first message includes first indication information, it indicates to retain the M time units; and a processing unit, configured to determine configuration information based on the first message. The transceiver unit is further configured to send the configuration information to the terminal device.

The transceiver unit may perform receiving and sending in the sixth aspect, and the processing unit may perform processing other than receiving and sending in the sixth aspect.

According to a thirteenth aspect, a communication apparatus is provided. The communication apparatus includes a transceiver, a processor, and a memory. The processor is configured to control the transceiver to send and receive a signal. The memory is configured to store a computer program. The processor is configured to invoke the computer program from the memory and run the computer program, to enable the communication apparatus to perform the method according to any one of the possible implementations of the first aspect to the sixth aspect.

Optionally, there are one or more processors, and there are one or more memories.

Optionally, the memory may be integrated with the processor, or the memory and the processor are separately disposed.

Optionally, the communication apparatus further includes a transmitter (transmitter device) and a receiver (receiver device).

According to a fourteenth aspect, a communication system is provided. The communication system includes a terminal device and a network device. The terminal device is configured to perform the method according to any one of the possible implementations of the first aspect, the second aspect, and the fifth aspect, and the network device is configured to perform the method according to any one of the possible implementations of the third aspect, the fourth aspect, and the sixth aspect.

According to a fifteenth aspect, a computer-readable storage medium is provided. The computer-readable storage medium stores a computer program or code. When the computer program or code is run on a computer, the computer is enabled to perform the method according to any one of the possible implementations of the first aspect to the sixth aspect.

According to a sixteenth aspect, a chip is provided. The chip includes at least one processor. The at least one processor is coupled to a memory. The memory is configured to store a computer program. The processor is configured to invoke the computer program from the memory and run the computer program, to enable an apparatus in which the chip system is installed to perform the method according to any one of the possible implementations of the first aspect to the sixth aspect.

The chip may include an input circuit or interface for sending information or data and an output circuit or interface for receiving information or data.

According to a seventeenth aspect, a computer program product is provided. The computer program product includes computer program code. When the computer program code is run on an apparatus, the apparatus is enabled to perform the method according to any one of the possible implementations of the first aspect to the sixth aspect.

### BRIEF DESCRIPTION OF DRAWINGS

FIG. 1 is a diagram of a wireless communication system to which an embodiment of this application is applicable;
FIG. 2 is a schematic flowchart of a communication method 200 according to an embodiment of this application;
FIG. 3 is a schematic flowchart of a communication method 300 according to an embodiment of this application;
FIG. 4 is a schematic flowchart of a communication method 300 according to an embodiment of this application;
FIG. 5 is a diagram of a structure of a communication apparatus 1000 according to an embodiment of this application;
FIG. 6 is a diagram of a structure of a communication apparatus 2000 according to an embodiment of this application; and
FIG. 7 is a diagram of a structure of a chip system 3000 according to an embodiment of this application.

### DESCRIPTION OF EMBODIMENTS

The following describes technical solutions of embodiments in this application with reference to the accompanying drawings.

The technical solutions provided in this application may be applied to various communication systems, such as a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A terminal device in embodiments of this application may also be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides a voice/data for a user, for example, a handheld device having a wireless connection function or a vehicle-mounted device. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, and a terminal device in a future evolved public land mobile network (public land mobile network, PLMN). This is not limited in embodiments of this application.

By way of example but not limitation, in embodiments of this application, the terminal device may alternatively be a wearable device. The wearable device may also be referred to as a wearable intelligent device, and is a general term of wearable devices that are intelligently designed and developed for daily wear by using a wearable technology, for example, glasses, gloves, a watch, clothing, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In embodiments of this application, an apparatus configured to implement a function of the terminal device, that is, a terminal apparatus, may be a terminal device, or may be an apparatus, for example, a chip system or a chip, that can support the terminal device in implementing the function. The apparatus may be installed in the terminal device. In embodiments of this application, the chip system may include a chip, or may include a chip and another discrete component.

A network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device and a wireless network. The base station may cover the following names in a broad sense, or may be replaced with the following names, for example, a NodeB (NodeB), an evolved NodeB (evolved NodeB, eNB), a next generation NodeB (next generation NodeB, gNB), a relay station, an access point, a transmission reception point (transmission reception point, TRP), a transmission point (transmission point, TP), a primary station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. The base station may alternatively be a communication module, a modem, or a chip that is disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a location of the mobile base station. In other examples, a helicopter or an uncrewed aerial vehicle may be configured as a device for communicating with another base station.

In some deployments, the network device mentioned in embodiments of this application may be a device including a CU or a DU, or a device including a CU and a DU, or a device including a control plane CU node (a central unit-control plane (central unit-control plane, CU-CP)), a user plane CU node (a central unit-user plane (central unit-user plane, CU-UP)), and a DU node.

In embodiments of this application, an apparatus configured to implement a function of a network device may be a network device, or may be an apparatus, for example, a chip system or a chip, that can support the network device in implementing the function. The apparatus may be installed in the network device. In embodiments of this application, the chip system may include a chip, or may include a chip and another discrete component.

The network device and the terminal device may be deployed on land, including indoor or outdoor devices, handheld devices, or vehicle-mounted devices; may be deployed on a water surface; or may be deployed on an airplane, a balloon, and a satellite in air. Scenarios in which the network device and the terminal device are located are not limited in embodiment of this application.

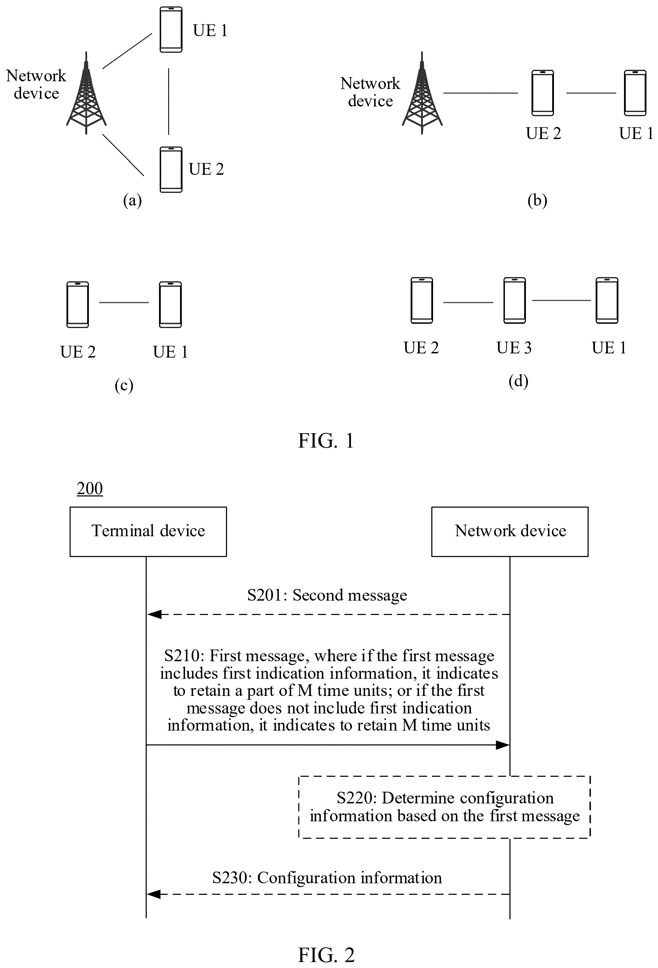

A communication system to which embodiments of this application are applicable is briefly described below with reference to FIG. 1.

FIG. 1 is a diagram of a wireless communication system to which an embodiment of this application is applicable. As shown in FIG. 1, the wireless communication system may include at least one terminal device, for example, a UE 1, a UE 2, and a UE 3 shown in FIG. 1. Optionally, the wireless communication system may further include at least one network device, for example, a network device shown in FIG. 1.

The network device and the terminal device may communicate with each other. For example, the network device and the terminal device may communicate with each other through a Uu interface, and a link (link) for communication between the network device and the terminal device may be denoted as a Uu link. As shown in (a) in FIG. 1, the network device and the UE 1 may directly communicate with each other. As shown in (b) in FIG. 1, the network device and the UE 1 may alternatively communicate with each other through the UE 2. Similarly, the network device and the UE 2 may directly communicate with each other, or the network device and the UE 2 may communicate with each other through the UE 1. It may be understood that, the Uu link represents a connection relationship between the terminal device and the network device, and is a logical concept rather than a physical entity. A primary link is merely named for differentiation, and a specific name of the primary link does not limit the protection scope of this application.

Terminal devices may also communicate with each other. For example, the terminal devices may directly communicate with each other. As shown in (a) to (c) in FIG. 1, the UE 1 and the UE 2 may directly communicate with each other. For another example, the terminal devices may communicate with each other through another device, for example, a network device or a terminal device. As shown in (a) in FIG. 1, the UE 1 and the UE 2 may communicate with each other through the network device. As shown in (d) in FIG. 1, the UE 1 and the UE 2 may communicate with each other through the UE 3. An interface for communication between terminal devices may be denoted as a proximity-based services communication 5 (proximity-based services communication 5, PC5) interface. A link for communication between terminal devices may be denoted as a sidelink SL, and communication between terminal devices may also be denoted as SL communication. The sidelink may also be referred to as a side link, a secondary link, or the like. It may be understood that the sidelink represents a connection relationship between the terminal devices, and is a logical concept rather than a physical entity. The sidelink is merely named for differentiation, and a specific name of the sidelink does not limit the protection scope of this application.

In an example, SL communication between terminal devices may be used in an internet of vehicles or an intelligent transportation system (intelligent transportation system, ITS), for example, the V2X communication described above.

Optionally, SL communication between terminal devices may be performed in network coverage, or may be performed without network coverage. As shown in (a) and (b) in FIG. 1, the UE 1 and another UE may communicate with each other in network coverage. Alternatively, as shown in (c) and (d) in FIG. 1, the UE 1 and another UE may communicate with each other outside a network coverage area (out-of-coverage).

Optionally, configuration information used during SL communication between terminal devices, for example, a time-frequency resource used during the SL communication between the terminal devices, may be configured or scheduled by a network device, or may be autonomously selected by the terminal device. This is not limited.

It may be understood that FIG. 1 is merely a simplified diagram of an example for ease of understanding. The wireless communication system may further include another network device or may include another terminal device, which is not shown in FIG. 1. Embodiments of this application are applicable to any communication scenario in which a transmit-end device communicates with a receive-end device.

It should be noted that, a specific structure of an entity for performing a method provided in embodiments of this application is not particularly limited in embodiments of this application, provided that the entity can run a program that records code for the method provided in embodiments of this application to perform communication according to the method provided in embodiments of this application. For example, the method provided in embodiments of this application may be performed by a terminal device or a functional module that is in a terminal device and that can invoke the program and execute the program.

For ease of understanding embodiments of this application, terms or technologies in this application are briefly described first.

### 1. Time domain unit and frequency domain unit

Data or information may be carried in a time-frequency resource.

In time domain, a time domain resource may include one or more time domain units (which may also be referred to as time units).

In embodiments of this application, a time domain unit/time unit is, for example, a radio frame (radio frame, RF), a subframe (subframe), a frame, a half-subframe or a half-frame, a slot (slot), a mini-slot (mini-slot), a partial slot (partial slot), an orthogonal frequency division multiplexing (orthogonal frequency division multiplexing, OFDM) symbol (symbol), a second (second), or a millisecond (millisecond). One or more time units may be consecutive or discrete in terms of time.

In frequency domain, a frequency domain resource may include one or more frequency domain units. A frequency domain unit may be a resource element (resource element, RE), a resource block (resource block, RB), a subchannel, a resource pool (resource pool), a bandwidth (bandwidth), a bandwidth part (bandwidth part, BWP), a carrier (carrier), a channel (channel), an interlace (interlace) RB, or the like.

### 2. Multi-card gap (gap)

A multi-sim terminal may be a terminal that has two or more telephone cards (SIM or USIM cards) at the same time. The multi-sim terminal may separately register with a same network or different networks by using the two or more telephone cards, for example, a same access network device or different access network devices and/or a same core network device or different core network devices. Unless otherwise specified, one card corresponds to one UE, and a plurality of cards in the multi-sim terminal correspond to a plurality of UEs. It should be understood that, the technical solutions of this application may be applied to a dual-card or multi-sim terminal device.

For example, when a card 1 is in an RRC connected (connected) mode and communicates with a network, a card 2 is in an RRC inactive (inactive) mode or an RRC idle (idle) mode, and the card 2 may perform activities such as paging receiving, serving cell measurement (intra-frequency measurement), neighboring cell measurement (intra-frequency measurement or inter-frequency measurement), and system information receiving. For some low-capability terminal devices, a card 1 and a card 2 of the low-capability terminal device share a set of radio frequency hardware, and the card 1 and the card 2 cannot work at the same time. When the card 2 needs to perform the foregoing activities, the card 1 needs to interrupt communication with a network. To be specific, the communication between the card 1 and the network is temporarily interrupted based on the concept of a "multi-sim gap". The "multi-sim gap" is a concept in terms of time. To be specific, in a time period of the "multi-sim gap", the communication between the card 1 and the network is temporarily interrupted. In this case, the terminal device may switch the radio frequency hardware from the card 1 to the card 2, so that the card 2 performs the foregoing activity. After the time period of the "multi-sim gap" ends, the terminal device may switch the radio frequency hardware from the card 2 to the card 1, to restore communication of the card 1.

Multi-card gaps include a periodic gap (periodic gap) and an aperiodic gap (aperiodic gap). The periodic gap indicates that interruption time appears with a short periodicity and keeps cycling. The aperiodic gap is a period of interruption time. After the period of interruption time ends, the aperiodic gap no longer takes effect. There may be a maximum of three periodic multi-sim gaps and one aperiodic multi-sim gap in total between a UE and a network device, a card 1 may recommend a maximum of three periodic multi-sim gaps and one aperiodic multi-sim gap to the network device based on an activity that needs to be performed by a card 2 (where for example, the multi-sim gap recommended by the UE to the network device is carried by using a UE assistance information message, the multi-sim gap recommended by the UE may be understood as an expected/preferred multi-sim gap indicated by the UE, and the recommended multi-sim gap is specifically multi-sim gap configuration information or multi-sim gap pattern pattern information). The network device finally configures a maximum of three periodic multi-sim gaps and one aperiodic multi-sim gap for the card 1 according to the recommendation of the card 1 (where for example, the multi-sim gap configured by the network device for the UE is carried by using an RRC reconfiguration message, the UE actually uses the configured multi-sim gap based on the configuration of the network device, and the configured multi-sim gap is specifically multi-sim gap configuration information or multi-sim gap pattern pattern information). The network device may select all or a part of the multi-sim gaps recommended by the UE, but once selected, the network device needs to perform configuration based on the gap configuration information or the gap pattern pattern information recommended by the UE. The multi-sim gap has a corresponding priority.

### 3. Measurement gap (gap)

In addition to the multi-sim gap, there is also the measurement gap. The measurement gap is a concept for only one card (one UE). Similarly, due to a set of radio frequency hardware, when UE expects to support inter-frequency measurement, the UE cannot perform communication on a frequency of a current serving cell, and needs to interrupt communication with a network, and perform inter-frequency measurement in a measurement gap. Measurement gaps include a periodic gap (periodic gap) and an aperiodic gap (aperiodic gap). The measurement gap does not need to be recommended by the UE, and is only configured by the network device for a UE. A plurality of measurement gaps may be configured. The measurement gap has a corresponding priority, and measurement gaps have no same priority.

### 4. Priority

Each multi-sim gap or measurement gap may have a corresponding priority level or a corresponding priority value. There may be a correspondence between the priority level and the priority value. For example, a higher priority level corresponds to a lower priority value, or a lower priority level corresponds to a lower priority value. For example, the higher priority level corresponds to the lower priority value, and the priority value may be an integer ranging from 1 to 16 or an integer ranging from 0 to 15. If the priority value ranges from 1 to 16, the priority value 1 indicates a highest-level priority. The foregoing briefly describes the terms in this application, and details are not described in the following embodiments again. In addition, the foregoing descriptions of the terms are merely descriptions for ease of understanding, and do not limit the protection scope of embodiments of this application.

When a conflict occurs between measurement gaps (where for example, if gap time periods completely or partially overlap, or an interval between an end location of a former gap and a start location of a latter gap is less than a specific time length, for example, 4 ms, it is considered that a conflict exists between the gaps), because the measurement gap is used for inter-frequency measurement, a radio frequency antenna cannot be switched in a timely manner, the conflicting measurement gaps cannot be used at the same time, and only one of the measurement gaps can be retained. For a measurement gap, it is currently specified that a measurement gap with a high priority is to be retained by default, and a measurement gap with a low priority is to be discarded.

When a conflict occurs between multi-sim gaps, because the multi-sim gaps are used for a plurality of purposes, the conflicting multi-sim gaps may be used at the same time or the conflicting multi-sim gaps cannot be used at the same time according to different statuses. For example, a multi-sim gap 1 is used for paging reception of a card 2, a multi-sim gap 2 is used for measurement of a serving cell of the card 2, a radio frequency antenna is not switched, and the conflicting multi-sim gaps may be used at the same time. For another example, a multi-sim gap 1 is used for paging reception of a card 2, a multi-sim gap 2 is used for measurement of a serving cell of the card 2, a radio frequency antenna is switched, and the conflicting multi-sim gaps cannot be used at the same time.

Currently, it is specified that the conflicting multi-sim gaps are all to be retained. However, if multi-sim gaps that cannot be used at the same time are all to be retained, communication needs to be interrupted in gap time, and a configured multi-sim gap is not used, causing a waste of resources in the gap time and a reduction in a system throughput. Therefore, when a conflict occurs between multi-sim gaps, how to effectively process the multi-sim gap, to avoid a case in which a multi-sim gap that can be used is discarded, and avoid a waste of resources and a reduction in a system throughput caused by existence of a multi-sim gap that cannot be used is a problem.

In view of this, this application provides a communication method and apparatus, to indicate, by using first indication information, to a network device that all or a part of conflicting multi-sim gaps are to be retained, so that resource utilization can be improved, a waste of resources can be reduced, and system transmission performance and a throughput can be ensured.

For ease of understanding of embodiments of this application, the following descriptions are provided.

First, in this application, unless otherwise specified or a logic conflict occurs, terms and/or descriptions in different embodiments are consistent and may be mutually referenced, and technical features in different embodiments may be combined based on an internal logical relationship thereof, to form a new embodiment.

Second, in this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In text descriptions of this application, the character "/" usually indicates an "or" relationship between associated objects. "At least one of the following items (pieces)" or a similar expression thereof refers to any combination of these items, including any combination of singular items (pieces) or plural items (pieces). For example, at least one item (piece) of a, b, and c may indicate a, b, c, a and b, a and c, b and c, or a, b, and c. Each of a, b, and c may be in a singular form or a plural form.

Third, in this application, "first", "second", and various number indications are used for differentiation for ease of description, and are not intended to limit the scope of embodiments of this application, for example, are intended to distinguish between different messages but not intended to describe a specific order or sequence. It should be understood that, objects described in this way are interchangeable in an appropriate circumstance, so that a solution other than the solutions in embodiments of this application can be described.

Fourth, in this application, the terms "include" and "have" and any variants thereof are intended to cover a non-exclusive inclusion. For example, a process, a method, a system, a product, or a device that includes a list of steps or units is not necessarily limited to those expressly listed steps or units, but may include other steps or units not expressly listed or inherent to such a process, method, product, or device.

Fifth, "protocols" in this application may be standard protocols in the communication field, for example, may include a 5G protocol, a new radio (new radio, NR) protocol, and a related protocol applied to a future communication system. This is not limited in this application. "Predefinition" may include predefinition, for example, protocol definition. "Preconfiguration" may be implemented by prestoring corresponding code or a corresponding table in a device, or may be implemented in another manner that may indicate related information. A specific implementation thereof is not limited in this application.

Sixth, in this application, "communication" may also be described as "data transmission", "information transmission", "data processing", or the like. "Transmission" includes "sending" and "receiving".

The following describes, in detail with reference to the accompanying drawings, the communication method provided in embodiments of this application. Embodiments provided in this application are applicable to any communication scenario in which a transmit-end device and a receive-end device communicate with each other, for example, may be applied to the communication system shown in FIG. 1.

FIG. 2 is a schematic flowchart of a communication method 200 according to an embodiment of this application. As shown in FIG. 2, the method includes a plurality of steps below. For a part that is not described in detail, refer to an existing protocol.

S210: A terminal device sends a first message to a network device, and correspondingly, the network device receives the first message from the terminal device.

The first message indicates a plurality of time units expected by the terminal device, the plurality of time units include M conflicting time units, and M is an integer greater than or equal to 2. For example, if the first message includes first indication information, the first indication information indicates to retain a part of the M time units; or if the first message does not include first indication information, it indicates to retain the M time units.

It should be understood that, the plurality of time units expected by the terminal device may be more than M time units. In other words, the plurality of time units expected by the terminal device further include a non-conflicting time unit, and all non-conflicting time units may be retained. The first indication information may indicate to retain only a part of the M time units, or may indicate to retain a part of the plurality of time units expected by the terminal device, including indicating to retain a part of the M time units.

In this embodiment of this application, the time unit may be replaced with another term such as time information, a time interval, a gap (gap), or a multi-sim gap (gap). For ease of description, an example in which the time unit is a multi-sim gap is used below for detailed description.

For example, the first message may be a UE assistance information (UE assistance information) message. The plurality of time units expected by the terminal device may be understood as a plurality of time units recommended or preferred by the terminal device. For example, the plurality of time units expected by the terminal device may be multi-sim gap configuration information or multi-sim gap pattern (pattern) information. The UE assistance information message may include a multi-sim gap list (MUSIM-GapPreferenceList), and the multi-sim gap list includes multi-sim gap configuration information or multi-sim gap pattern (pattern) information. It should be understood that, a multi-sim gap may be used by the terminal device to perform paging receiving, serving cell measurement (intra-frequency measurement), neighboring cell measurement (intra-frequency measurement or inter-frequency measurement), system information receiving, and the like on another card. Multi-card gaps include a periodic gap (periodic gap) and an aperiodic gap (aperiodic gap). The periodic gap indicates that interruption time appears with a short periodicity and keeps cycling. The aperiodic gap indicates a period of interruption time. After the period of interruption time ends, the aperiodic gap no longer takes effect. Usually, there may be a maximum of three periodic multi-sim gaps and one aperiodic multi-sim gap in total between the terminal device and the network device.

Optionally, the first message further indicates priorities corresponding to the plurality of time units expected by the terminal device. If the network device determines, based on the first message, to configure the multi-sim gap for the terminal device, the network device may further indicate, to the terminal device based on the priority in the first message, a priority of the configured multi-sim gap.

For example, the terminal device may request, by using the UE assistance information message, the network device to configure a plurality of multi-sim gaps. For example, four multi-sim gaps are respectively a multi-sim gap #1, a multi-sim gap #2, a multi-sim gap #3, and a multi-sim gap #4. It is assumed that M=2. For example, a conflict exists between the multi-sim gap #1 and the multi-sim gap #2. If the UE assistance information message includes the first indication information, the first indication information indicates to retain one of the two conflicting multi-sim gaps, that is, to retain the multi-sim gap #1 or the multi-sim gap #2. If the UE assistance information message does not include the first indication information, it indicates to retain the two conflicting multi-sim gaps, that is, to retain the multi-sim gap #1 and the multi-sim gap #2.

It should be understood that, the M conflicting time units mean that the M time units completely overlap or partially overlap in time domain, or an interval between an end location of a former time unit and a start location of a latter time unit is less than a preset threshold, for example, 4 ms. For example, if M=2, the two conflicting time units (for example, a multi-sim gap #1 and a multi-sim gap #2, where it is assumed that the multi-sim gap #1 is before the multi-sim gap #2 in time domain) may be understood as follows: The multi-sim gap #1 and the multi-sim gap #2 completely overlap in time domain, for example, in a time period starting from a system frame number (system frame number, SFN) 2 for 3 ms. Alternatively, the multi-sim gap #1 and the multi-sim gap #2 partially overlap in time domain. For example, the multi-sim gap #1 occupies a time period starting from a system frame number (system frame number, SFN) 2 for 3 ms, and the multi-sim gap #2 occupies a time period starting from a system frame number (system frame number, SFN) 3 for 3 ms; or a time interval between an end location of the multi-sim gap #1 and a start location of the multi-sim gap #2 is less than 4 ms. Optionally, a value of M may alternatively be 3, 4, or another value. The foregoing is merely an example provided for ease of understanding. This is not limited in this application.

It should be noted that, the M conflicting time units may mean that a conflict exists at a moment or in a time period, and no conflict exists at a moment or in a time period. In this application, it is not required that the M conflicting time units conflict at any moment. For example, if the M time units are all periodic gaps, the M periodic gaps may conflict in a part of periodicities. If the M time units are a periodic gap and an aperiodic gap, the periodic gap conflicts with the aperiodic gap in a part of periodicities.

For example, if the first message does not include the first indication information, it indicates to retain the M time units. In this implementation, the terminal device may not include the first indication information in the first message, to indicate, to the network device, that the M conflicting time units may be retained.

For example, if the first message includes the first indication information, the first indication information indicates to retain a part of the M time units. This indicates that if the first indication information exists in the first message, it indicates to retain a part of the M conflicting time units. Alternatively, it may be understood that if the first indication information exists in the first message, the first indication information indicates to discard a part of the M time units. It may be understood that, if the first message includes the first indication information, not all of the M time units are to be retained, but only a part of the M time units are to be retained; and the other time units in the M time units are to be discarded, and not all of the M time units are to be discarded. "Discard" may also be understood as "not retain".

It should be noted that, "discard" herein does not mean "discard" in a true sense, but may be understood as that the terminal device indicates, by using the first indication information, to discard a part of the M time units. To be specific, the network device may configure a plurality of time units for the terminal device based on the first message. However, because a conflict exists between the M time units, the terminal device and the network device subsequently use only a part of the M time units (that is, a part of time units that are retained) based on the first indication information, and do not use the other time units (that is, a part of time units that are discarded or not retained) in the M time units. In other words, the retained time unit may be understood as a time unit that can be used when a conflict exists, and the discarded time unit may be understood as a time unit that is no longer used when a conflict exists. In addition, unless otherwise specified, existence or non-existence of the first indication information plays a role only when a conflict exists between the M time units.

It should be further noted that, the M conflicting time units may conflict at a moment or in a time period. Retaining the M conflicting time units may be specifically retaining the M time units in conflicting time, that is, the M time units may be used in the conflicting time, and the M time units may be naturally retained in non-conflicting time. Retaining a part of the M conflicting time units may be specifically retaining a part of the M time units in conflicting time, that is, a part of the M time units may be used in the conflicting time. Discarding a part of the M time units may be specifically discarding a part of the M time units in conflicting time, that is, a part of the M time units are no longer used in the conflicting time, and all of the M time units may be naturally retained in non-conflicting time.

In this embodiment of this application, "indicate" may include "directly indicate" and "indirectly indicate". When it is described that the first indication information indicates to retain a part of the M time units, the following may be included: The first indication information directly indicates to retain a part of the M time units, or indirectly indicates to retain a part of the M time units, for example, indicates to discard the other time units in the M time units. In other words, this does not mean that the first indication information definitely carries a part of the M time units that need to be retained, or may carry the other time units that need to be discarded in the M time units.

In an implementation, the M time units include N groups of conflicting time units, each of the N groups of time units includes a plurality of time units, and N is an integer greater than or equal to 1. If the first message includes the first indication information, the first indication information indicates to retain a part of time units in each of P groups of time units, and the P groups of time units are a part or all of the N groups of time units.

For example, assuming that M=2, N=1, and P=1, the group of multi-sim gaps includes two multi-sim gaps, for example, a multi-sim gap #1 and a multi-sim gap #2. In this case, if the first indication information exists, the first indication information indicates to retain the multi-sim gap #1 or the multi-sim gap #2 in the group of multi-sim gaps. Alternatively, assuming that M=4, N=2, and P=1, each of the two groups of multi-sim gaps may include two multi-sim gaps. For example, a first group of multi-sim gaps includes a multi-sim gap #1 and a multi-sim gap #2, and a second group of multi-sim gaps includes a multi-sim gap #3 and a multi-sim gap #4. In this case, if the first indication information exists, the first indication information indicates to retain the multi-sim gap #1 or the multi-sim gap #2 in the first group of multi-sim gaps, or indicates to retain the multi-sim gap #3 or the multi-sim gap #4 in the second group of multi-sim gaps. Alternatively, assuming that M=4, N=2, and P=2, each of the two groups of multi-sim gaps may include two multi-sim gaps. For example, a first group of multi-sim gaps includes a multi-sim gap #1 and a multi-sim gap #2, and a second group of multi-sim gaps includes a multi-sim gap #3 and a multi-sim gap #4. In this case, if the first indication information exists, the first indication information indicates to retain the multi-sim gap #1 or the multi-sim gap #2 in the first group of multi-sim gaps, and indicates to retain the multi-sim gap #3 or the multi-sim gap #4 in the second group of multi-sim gaps.

Optionally, before step S210 is performed, the method 200 may further include step S201 below. To be specific, before the terminal device sends the first message to the network device, the terminal device may be indicated to report the first message.

S201: The network device sends a second message to the terminal device, and correspondingly, the terminal device receives the second message from the network device. The second message indicates that the terminal device is allowed to send the first message to the network device.

For example, the second message may be an RRC reconfiguration message. For example, the network device indicates, by using the RRC reconfiguration message, whether the UE assistance information message sent by the terminal device is allowed to include the first indication information, so that the network device knows how the terminal device processes the M conflicting time units. For example, if the second message indicates that the terminal device is allowed to send the first message to the network device, when the UE assistance information message includes M conflicting multi-sim gaps, the terminal device may include the first indication information in the first message; or if the second message indicates that the terminal device is not allowed to send the first message to the network device, when the UE assistance information message includes M conflicting multi-sim gaps, the terminal device cannot include the first indication information in the first message.

The following describes, by using examples, specific implementations in a scenario in which the first indication information exists, to be specific, if the first message includes the first indication information, the first indication information indicates to retain a part of the M time units. It should be understood that, in this scenario, not all of the M conflicting time units can be retained.

In a first implementation, the first indication information indicates to retain a part of the M time units, and the part of time units are a part of time units with high priorities.

Optionally, when a conflict exists between a plurality of multi-sim gaps, it is specified (for example, predefined in a protocol) that a multi-sim gap with a high priority is to be preferentially retained, or a multi-sim gap with a low priority is to be preferentially discarded. Therefore, when the terminal device indicates, by using the first indication information, to retain or discard a part of the multi-sim gaps, usually, a multi-sim gap to be retained is a multi-sim gap with a high priority, or a multi-sim gap to be discarded is a multi-sim gap with a low priority.

Optionally, a priority of a time unit may be a priority corresponding to a multi-sim gap expected by the terminal device, or may be a priority of a multi-sim gap configured by the network device for the terminal device. Optionally, if the terminal device indicates the priority corresponding to the multi-sim gap expected by the terminal device, the priority is used as a determining priority; or if the terminal device does not indicate the priority corresponding to the multi-sim gap expected by the terminal device, the priority of the multi-sim gap configured by the network device for the terminal device is used as a determining priority.

Optionally, a part of time units with high priorities that are to be retained may be one or more time units. In other words, one time unit with a highest priority may be retained, or the first several time units with higher priorities may be retained. For example, one or more time units to be retained may be predefined in a protocol or configured by the network device.

For example, the first indication information may be 1-bit indication information. For example, if M=2, the conflicting multi-sim gaps are respectively a multi-sim gap #1 and a multi-sim gap #2. If the first indication information exists, it indicates to retain one of the multi-sim gap #1 and the multi-sim gap #2. According to a specification that a multi-sim gap with a high priority is to be preferentially retained, or a multi-sim gap with a low priority is to be preferentially discarded, a multi-sim gap with a high priority in the multi-sim gap #1 and the multi-sim gap #2 is to be retained, and a multi-sim gap with a low priority in the multi-sim gap #1 and the multi-sim gap #2 is to be discarded. For example, if a priority of the multi-sim gap #1 is higher than that of the multi-sim gap #2, when the first indication information is carried in the first message, the multi-sim gap #1 is to be retained, and the multi-sim gap #2 is to be discarded.

For example, the first indication information may be 1-bit indication information. For example, if M=3, the conflicting multi-sim gaps are respectively a multi-sim gap #1, a multi-sim gap #2, and a multi-sim gap #3. If the first indication information exists, it indicates to retain one or two of the multi-sim gap #1, the multi-sim gap #2, and the multi-sim gap #3. According to a specification that a multi-sim gap with a high priority is to be preferentially retained, or a multi-sim gap with a low priority is to be preferentially discarded, a multi-sim gap with a high priority in the multi-sim gap #1, the multi-sim gap #2, and the multi-sim gap #3 is to be retained, and a multi-sim gap with a low priority in the multi-sim gap #1, the multi-sim gap #2, and the multi-sim gap #3 is to be discarded. One or two specific multi-sim gaps to be retained may be predefined in a protocol or configured by the network device. For example, the protocol predefines that only one multi-sim gap is to be retained. If a priority of the multi-sim gap #1 is higher than that of the multi-sim gap #2, and the priority of the multi-sim gap #2 is higher than that of the multi-sim gap #3, when the first indication information is carried in the first message, the multi-sim gap #1 is to be retained, and the multi-sim gap #2 and the multi-sim gap #3 are to be discarded.

It should be understood that, this implementation is mainly applicable to a case in which a plurality of conflicting multi-sim gaps with different priorities exist, and a plurality of conflicting multi-sim gaps with a same priority cannot be supported. In addition, this implementation is not applicable to a case in which a plurality of pairs of conflicting multi-sim gaps exist. For example, a multi-sim gap #1 conflicts with a multi-sim gap #2 but both may be retained, and a multi-sim gap #3 conflicts with a multi-sim gap #4 but only one of the two gaps is to be retained. The first indication information is not applicable to the foregoing case. Optionally, it is specified that different multi-sim gaps correspond to different priorities.

Optionally, the first indication information indicates to retain a part of the M time units, and the part of time units are a part of time units with small periodicities.

Optionally, when a conflict exists between a plurality of multi-sim gaps, it is specified (for example, predefined in a protocol) that a multi-sim gap with a small periodicity is to be preferentially retained, or a multi-sim gap with a large periodicity is to be preferentially discarded. Therefore, when the terminal device indicates, by using the first indication information, to retain or discard a part of the multi-sim gaps, usually, a multi-sim gap to be retained is a multi-sim gap with a small periodicity, or a multi-sim gap to be discarded is a multi-sim gap with a large periodicity.

Optionally, a part of time units with small periodicities that are to be retained may be one or more time units. In other words, one time unit with a smallest periodicity may be retained, or the first several time units with smallest periodicities may be retained. For example, one or more time units to be retained may be predefined in a protocol. It should be understood that, this implementation is mainly applicable to a case in which a plurality of conflicting multi-sim gaps with different periodicities exist, and a plurality of conflicting multi-sim gaps with a same periodicity cannot be supported. In addition, this implementation is not applicable to a case in which a plurality of pairs of conflicting multi-sim gaps exist. For example, a multi-sim gap #1 conflicts with a multi-sim gap #2 but both may be retained, and a multi-sim gap #3 conflicts with a multi-sim gap #4 but only one of the two gaps is to be retained. The first indication information is not applicable to the foregoing case. Optionally, it is specified that different multi-sim gaps need to correspond to different periodicities.

It should be noted that, for the plurality of conflicting multi-sim gaps, the foregoing implementations of determining, based on priorities, a multi-sim gap to be retained or discarded and determining, based on periodicities, a multi-sim gap to be retained or discarded may be implemented independently or in combination. This is not limited in this application. For example, there are three conflicting multi-sim gaps, for example, a multi-sim gap #1, a multi-sim gap #2, and a multi-sim gap #3. Priorities of the multi-sim gap #1, the multi-sim gap #2, and the multi-sim gap #3 are in descending order, and periodicities of the multi-sim gap #1, the multi-sim gap #2, and the multi-sim gap #3 are in ascending order. In this case, it may be determined that the multi-sim gap #1 is to be retained, and the multi-sim gap #2 and the multi-sim gap #3 are to be discarded; or the multi-sim gap #1 and the multi-sim gap #2 are to be retained, and the multi-sim gap #3 is to be discarded.

In a second implementation, the first indication information indicates a time unit that cannot coexist in the M time units, the M time units include a first part of time units and a second part of time units, and the first indication information indicates that coexistence of the first part of time units and the second part of time units in the M time units is not allowed. In other words, if there is a time unit other than the first part of time units and the second part of time units in the M time units, the first indication information further indicates that coexistence of the time unit other than the first part of time units and the second part of time units in the M time units is allowed.

Optionally, a sum of a quantity of the first part of time units and a quantity of the second part of time units is less than or equal to M. It should be understood that, the first indication information indicates a multi-sim gap that cannot coexist. For example, a first part of multi-sim gaps and a second part of multi-sim gaps in the M multi-sim gaps cannot coexist. When a conflict exists in the multi-sim gap that cannot coexist and that is indicated by the first indication information, according to a specification (for example, predefinition in a protocol), a multi-sim gap with a high priority may be retained, or a multi-sim gap with a low priority may be discarded. It should be noted that, if the first indication information indicates only one multi-sim gap that cannot coexist, the multi-sim gap may be discarded; or if there are more than two indicated multi-sim gaps that cannot coexist, a multi-sim gap with a highest priority is to be preferentially retained, and one or more other multi-sim gaps with lower priorities are to be discarded.

Optionally, a priority of a time unit may be a priority corresponding to a multi-sim gap expected by the terminal device, or may be a priority of a multi-sim gap configured by the network device for the terminal device. Optionally, if the terminal device indicates the priority corresponding to the multi-sim gap expected by the terminal device, the priority is used as a determining priority; or if the terminal device does not indicate the priority corresponding to the multi-sim gap expected by the terminal device, the priority of the multi-sim gap configured by the network device for the terminal device is used as a determining priority.

Optionally, a part of time units with high priorities that are to be retained may be one or more time units. In other words, one time unit with a highest priority may be retained, or the first several time units with highest priorities may be retained. For example, one or more time units to be retained may be predefined in a protocol.

For example, if M=2, the conflicting multi-sim gaps are respectively a multi-sim gap #1 and a multi-sim gap #2. The first indication information indicates that coexistence of the multi-sim gap #1 and the multi-sim gap #2 is not allowed. This means that one of the multi-sim gap #1 and the multi-sim gap #2 is to be retained. For example, if a priority of the multi-sim gap #1 is higher than that of the multi-sim gap #2, the multi-sim gap #1 with a higher priority is to be retained, and the multi-sim gap #2 with a lower priority is to be discarded.

For example, if M=3, the conflicting multi-sim gaps are respectively a multi-sim gap #1, a multi-sim gap #2, and a multi-sim gap #3. The first indication information indicates that coexistence of the multi-sim gap #1 and the multi-sim gap #3 is not allowed. This means that coexistence of the multi-sim gap #2 and the multi-sim gap #1 or the multi-sim gap #3 is allowed, that is, the multi-sim gap #2 may be retained, and one of the multi-sim gap #1 and the multi-sim gap #3 may be retained. For example, if a priority of the multi-sim gap #3 is higher than that of the multi-sim gap #1, the multi-sim gap #3 with a higher priority is to be retained, and the multi-sim gap #1 with a lower priority is to be discarded.

For example, if M=3, the conflicting multi-sim gaps are respectively a multi-sim gap #1, a multi-sim gap #2, and a multi-sim gap #3. The first indication information indicates that coexistence of the multi-sim gap #1, the multi-sim gap #2, and the multi-sim gap #3 is not allowed. This means that one or two of the multi-sim gap #1, the multi-sim gap #2, and the multi-sim gap #3 are to be retained. According to a specification that a multi-sim gap with a high priority is to be preferentially retained, or a multi-sim gap with a low priority is to be preferentially discarded, a multi-sim gap with a high priority in the multi-sim gap #1, the multi-sim gap #2, and the multi-sim gap #3 is to be retained, and a multi-sim gap with a low priority in the multi-sim gap #1, the multi-sim gap #2, and the multi-sim gap #3 is to be discarded. One or two specific multi-sim gaps to be retained may be predefined in a protocol or configured by the network device. For example, the protocol predefines that only one multi-sim gap is to be retained. If a priority of the multi-sim gap #1 is higher than that of the multi-sim gap #2, and the priority of the multi-sim gap #2 is higher than that of the multi-sim gap #3, when the first indication information is carried in the first message, the multi-sim gap #1 is to be retained, and the multi-sim gap #2 and the multi-sim gap #3 are to be discarded.

It should be understood that, this implementation is mainly applicable to a case in which a plurality of conflicting multi-sim gaps with different priorities exist, and a plurality of conflicting multi-sim gaps with a same priority cannot be supported. In addition, this implementation is not applicable to a case in which a plurality of pairs of conflicting multi-sim gaps exist and cannot be all retained. For example, a multi-sim gap #1 conflicts with a multi-sim gap #2 but only one of the two gaps is to be retained, and a multi-sim gap #3 conflicts with a multi-sim gap #4 but only one of the two gaps is to be retained. The first indication information is not applicable to the foregoing case. Optionally, it is specified that different multi-sim gaps need to correspond to different priorities.

In a first example, the first indication information indicates an identifier of a time unit that cannot coexist. For example, the first indication information includes identifiers of the first part of time units and identifiers of the second part of time units, that is, the first indication information carries the identifiers of the first part of time units and the identifiers of the second part of time units, to indicate that the first part of time units and the second part of time units cannot coexist.

There may be one or more multi-sim gaps that cannot coexist. This is not limited in this application.

It should be noted that, a periodic multi-sim gap has a defined identifier, and an aperiodic multi-sim gap does not have a defined identifier. Values of identifiers of periodic multi-sim gaps may be an identifier 0, an identifier 1, and an identifier 2, and are in one-to-one correspondence with a sequence of multi-sim gaps in a plurality of multi-sim gaps (where for example, a representation form of the plurality of multi-sim gaps may be a multi-sim gap list) that are expected by the terminal device and that are indicated by the first message. For example, if the multi-sim gap list expected by the terminal device includes three periodic multi-sim gaps (for example, a periodic multi-sim gap 1, a periodic multi-sim gap 2, and a periodic multi-sim gap 3), an identifier of the periodic multi-sim gap 1 is 0, an identifier of the periodic multi-sim gap 2 is 1, and an identifier of the periodic multi-sim gap 3 is 2. For ease of description, in this application, a special value may be specified as an identifier of an aperiodic multi-sim gap, for example, a special value 3 (that is, an identifier 3), an aperiodic gap, or another special value. This is not limited in this embodiment. For brevity, details are not described in the following related parts.

For example, the UE assistance information message (that is, the first message) includes a multi-sim gap list expected/preferred by a UE, and further includes the first indication information indicating a multi-sim gap that cannot coexist in multi-sim gaps expected/preferred by the UE. As shown in Table 1, it is assumed that a plurality of multi-sim gaps expected by the terminal device are respectively a periodic multi-sim gap #1, a periodic multi-sim gap #2, a periodic multi-sim gap #3, and an aperiodic multi-sim gap #4, and corresponding identifiers are respectively an identifier 0, an identifier 1, an identifier 2, and an identifier 3 (or an aperiodic gap). For example, if M=4, it indicates that a conflict exists in the four multi-sim gaps. When the first indication information indicates that coexistence of the periodic multi-sim gap #1 and the periodic multi-sim gap #3 is not allowed, the first indication information includes the identifiers of the periodic multi-sim gap #1 and the periodic multi-sim gap #3, that is, the identifier 0 and the identifier 2. This means that one of the periodic multi-sim gap #1 and the periodic multi-sim gap #3 is to be retained. For example, if a priority of the periodic multi-sim gap #1 is higher than that of the periodic multi-sim gap #2, the periodic multi-sim gap #1 with a higher priority is to be preferentially retained, and the periodic multi-sim gap #3 with a lower priority is to be discarded. In other words, in this case, the first indication information indirectly indicates that coexistence of the periodic multi-sim gap #2 and the aperiodic multi-sim gap #4 is allowed, and the periodic multi-sim gap #2 and the aperiodic multi-sim gap #4 are to be retained.

**Table 1**

| UE assistance information message | |
|---|---|
| Multi-card gap list (MUSIM-GapPreferenceList) expected/preferred by a UE | Periodic multi-sim gap #1 (corresponding to an identifier 0) |
| | Periodic multi-sim gap #2 (corresponding to an identifier 1) |
| | Periodic multi-sim gap #3 (corresponding to an identifier 2) |
| | Aperiodic multi-sim gap #4 (corresponding to an identifier 3 or an aperiodic gap) |
| First indication information (indicating that coexistence is not allowed) | Identifier 0 |
| | Identifier 2 |
| First indication information (indicating that coexistence is allowed) | Identifier 1 |
| | Identifier 3 or aperiodic gap |

Optionally, when the first indication information indicates that coexistence of the periodic multi-sim gap #2 and the aperiodic multi-sim gap #4 is not allowed, the first indication information includes the identifiers of the periodic multi-sim gap #2 and the aperiodic multi-sim gap #4, that is, the identifier 1 and the identifier 3 (or the aperiodic gap). This means that one of the periodic multi-sim gap #2 and the aperiodic multi-sim gap #4 is to be retained. For example, if a priority of the aperiodic multi-sim gap #4 is higher than that of the periodic multi-sim gap #2, the aperiodic multi-sim gap #4 with a higher priority is to be preferentially retained, and the multi-sim gap #2 with a lower priority is to be discarded. In other words, in this case, the first indication information indirectly indicates that coexistence of the periodic multi-sim gap #1 and the periodic multi-sim gap #3 is allowed, and the periodic multi-sim gap #1 and the periodic multi-sim gap #3 are to be retained.

It should be understood that, the first indication information may indicate an identifier of a time unit that is allowed to coexist, and indirectly indicate a time unit that cannot coexist in the M time units.

In a second example, a value of the first indication information indicates a time unit that cannot coexist. For example, the first indication information includes second indication information and third indication information, the second indication information corresponds to the first part of time units, and the third indication information corresponds to the second part of time units. The second indication information and the third indication information herein may be understood as the first indication information. In other words, each of the M conflicting time units in this implementation corresponds to one piece of first indication information, or each of a plurality of time units expected by the terminal device in this implementation corresponds to one piece of first indication information. Values of the second indication information and the third indication information are both a first value, and the first value indicates that the coexistence of the first part of time units and the second part of time units is not allowed. To be specific, values of first indication information corresponding to the first part of time units and first indication information corresponding to the second part of time units are both the first value, to indicate that the first part of time units and the second part of time units cannot coexist.

There may be one or more multi-sim gaps that cannot coexist. This is not limited in this application.

For example, if there is a time unit other than the first part of time units and the second part of time units in the M time units, assuming that coexistence of the time unit (for example, a third part of time units) other than the first part of time units and the second part of time units in the M time units is allowed, a value of first indication information corresponding to each time unit in the third part of time units is a second value. Alternatively, if there is a time unit (for example, a fourth part of time units) other than the first part of time units and the second part of time units in the plurality of time units expected by the terminal device, assuming that coexistence of the fourth part of time units is allowed, a value of first indication information corresponding to each time unit in the fourth part of time units is a second value. The second value indicates that the coexistence of the third part of time units is allowed, or indicates that the coexistence of the fourth part of time units is allowed. That is, the value of the first indication information corresponding to the time unit is the second value, to indicate that the coexistence of the time unit is allowed.

For example, the UE assistance information message (that is, the first message) includes a multi-sim gap list expected/preferred by a UE, and correspondingly includes one piece of first indication information for each multi-sim gap expected/preferred by the UE. As shown in Table 2, it is assumed that a plurality of multi-sim gaps expected by the terminal device are respectively a periodic multi-sim gap #1, a periodic multi-sim gap #2, a periodic multi-sim gap #3, and an aperiodic multi-sim gap #4, and corresponding identifiers are respectively an identifier 0, an identifier 1, and an identifier 2. For example, if M=4, it indicates that a conflict exists in the four multi-sim gaps. When the first indication information indicates that coexistence of the periodic multi-sim gap #1 and the periodic multi-sim gap #3 is not allowed, a value of second indication information (that is, first indication information) corresponding to the periodic multi-sim gap #1 is the first value, and a value of third indication information (that is, first indication information) corresponding to the periodic multi-sim gap #3 is also the first value. This means that one of the periodic multi-sim gap #1 and the periodic multi-sim gap #3 is to be retained. For example, if a priority of the periodic multi-sim gap #1 is higher than that of the periodic multi-sim gap #3, the periodic multi-sim gap #1 with a higher priority is to be preferentially retained, and the multi-sim gap #3 with a lower priority is to be discarded. In other words, in this case, coexistence of the periodic multi-sim gap #2 and the aperiodic multi-sim gap #4 is allowed, and the periodic multi-sim gap #2 and the aperiodic multi-sim gap #4 may be retained. For example, values of first indication information corresponding to the periodic multi-sim gap #2 and first indication information corresponding to the aperiodic multi-sim gap #4 are both the second value, and the second value indicates that the coexistence of the periodic multi-sim gap #2 and the aperiodic multi-sim gap #4 is allowed.

**Table 2**

| UE assistance information message | |
|---|---|
| Multi-card gap list (MUSIM-GapPreferenceList) expected/preferred by a UE | Periodic multi-sim gap #1 (corresponding to an identifier 0) |
| | First indication information of a first value Periodic multi-sim gap #2 (corresponding to an identifier 1) |
| | First indication information of a second value Periodic multi-sim gap #3 (corresponding to an identifier 2) |
| | First indication information of the first value |
| | Aperiodic multi-sim gap #4 |
| | First indication information of the second value |

Optionally, when the first indication information indicates that coexistence of the periodic multi-sim gap #2 and the aperiodic multi-sim gap #4 is not allowed, a value of second indication information (that is, first indication information) corresponding to the periodic multi-sim gap #2 is the first value, and a value of third indication information (that is, first indication information) corresponding to the aperiodic multi-sim gap #4 is also the first value. This means that one of the periodic multi-sim gap #2 and the aperiodic multi-sim gap #4 is to be retained. For example, if a priority of the periodic multi-sim gap #2 is higher than that of the aperiodic multi-sim gap #4, the periodic multi-sim gap #2 with a higher priority is to be preferentially retained, and the aperiodic multi-sim gap #4 with a lower priority is to be discarded. In this case, coexistence of the periodic multi-sim gap #1 and the periodic multi-sim gap #3 is allowed, and the periodic multi-sim gap #1 and the periodic multi-sim gap #3 are to be retained. For example, values of first indication information corresponding to the periodic multi-sim gap #1 and first indication information corresponding to the periodic multi-sim gap #3 are both the second value, and the second value indicates that coexistence of the periodic multi-sim gap #1 and the periodic multi-sim gap #3 is allowed.

In a third example, existence of the first indication information indicates a time unit that cannot coexist. For example, the first indication information includes second indication information and third indication information, the second indication information corresponds to the first part of time units, and the third indication information corresponds to the second part of time units. The second indication information and the third indication information herein may be understood as the first indication information. In other words, each of the M conflicting time units in this implementation corresponds to one piece of first indication information, or each of a plurality of time units expected by the terminal device in this implementation corresponds to one piece of first indication information. If the first message includes the second indication information and the third indication information, it indicates that the coexistence of the first part of time units and the second part of time units is not allowed. To be specific, existence of both first indication information corresponding to the first part of time units and first indication information corresponding to the second part of time units indicates that the first part of time units and the second part of time units cannot coexist.

There may be one or more multi-sim gaps that cannot coexist. This is not limited in this application.

For example, if there is a time unit other than the first part of time units and the second part of time units in the M time units, assuming that coexistence of the time unit (for example, a third part of time units) other than the first part of time units and the second part of time units in the M time units is allowed, first indication information corresponding to each time unit in the third part of time units does not exist, that is, the first message does not include the first indication information corresponding to each time unit in the third part of time units. Alternatively, if there is a time unit (for example, a fourth part of time units) other than the first part of time units and the second part of time units in the plurality of time units expected by the terminal device, assuming that coexistence of the fourth part of time units is allowed, first indication information corresponding to each time unit in the fourth part of time units does not exist, that is, the first message does not include the first indication information corresponding to each time unit in the fourth part of time units. The first indication information corresponding to each time unit in the third part of time units does not exist, indicating that coexistence of each time unit in the third part of the time units is allowed. The first indication information corresponding to each time unit in the fourth part of time units does not exist, indicating that coexistence of each time unit in the fourth part of time units is allowed. That is, non-existence of the first indication information corresponding to the time unit indicates that the coexistence of the time unit is allowed.

For example, the UE assistance information message (that is, the first message) includes a multi-sim gap list expected/preferred by a UE, and correspondingly includes one piece of first indication information for each multi-sim gap expected/preferred by the UE. As shown in Table 3, it is assumed that a plurality of multi-sim gaps expected by the terminal device are respectively a periodic multi-sim gap #1, a periodic multi-sim gap #2, a periodic multi-sim gap #3, and an aperiodic multi-sim gap #4, and corresponding identifiers are respectively an identifier 0, an identifier 1, and an identifier 2. For example, if M=4, it indicates that a conflict exists in the four multi-sim gaps. When the first indication information indicates that coexistence of the periodic multi-sim gap #1 and the periodic multi-sim gap #3 is not allowed, in the UE assistance information message, both second indication information corresponding to the periodic multi-sim gap #1 and third indication information corresponding to the periodic multi-sim gap #3 exist. This means that one of the periodic multi-sim gap #1 and the periodic multi-sim gap #3 is to be retained. For example, if a priority of the periodic multi-sim gap #1 is higher than that of the periodic multi-sim gap #3, the periodic multi-sim gap #1 with a higher priority is to be preferentially retained, and the multi-sim gap #3 with a lower priority is to be discarded. In other words, in this case, coexistence of the periodic multi-sim gap #2 and the aperiodic multi-sim gap #4 is allowed, and the periodic multi-sim gap #2 and the aperiodic multi-sim gap #4 may be retained. For example, first indication information corresponding to the periodic multi-sim gap #2 and first indication information corresponding to the aperiodic multi-sim gap #4 do not exist.

**Table 3**

| UE assistance information message | |
|---|---|
| Multi-card gap list (MUSIM-GapPreferenceList) expected/preferred by a UE | Periodic multi-sim gap #1 (corresponding to an identifier 0) |
| | First indication information that exists Periodic multi-sim gap #2 (corresponding to an identifier 1) |
| | Periodic multi-sim gap #3 (corresponding to an identifier 2) |
| | First indication information that exists |
| | Aperiodic multi-sim gap #4 |

Optionally, when the first indication information indicates that coexistence of the periodic multi-sim gap #2 and the aperiodic multi-sim gap #4 is not allowed, in the UE assistance information message, second indication information corresponding to the periodic multi-sim gap #2 exists, and third indication information corresponding to the aperiodic multi-sim gap #4 also exists. This means that one of the periodic multi-sim gap #2 and the aperiodic multi-sim gap #4 is to be retained. For example, if a priority of the periodic multi-sim gap #2 is higher than that of the aperiodic multi-sim gap #4, the periodic multi-sim gap #2 with a higher priority is to be preferentially retained, and the aperiodic multi-sim gap #4 with a lower priority is to be discarded. In this case, coexistence of the periodic multi-sim gap #1 and the periodic multi-sim gap #3 is allowed, and the periodic multi-sim gap #1 and the periodic multi-sim gap #3 are to be retained. For example, first indication information corresponding to the periodic multi-sim gap #1 and first indication information corresponding to the periodic multi-sim gap #3 do not exist.

In a third implementation, the first indication information indicates to retain or discard a time unit. If the first indication information indicates to retain the time unit, the time unit is retained, or if the first indication information indicates to discard the time unit, the time unit is discarded.

For example, the first indication information indicates a time unit to be retained or discarded in the M time units, or the first indication information indicates a time unit to be retained or discarded in a plurality of time units expected by the terminal device.

It should be understood that, this implementation is applicable to a plurality of conflicting multi-sim gaps with different priorities, and is also applicable to a plurality of conflicting multi-sim gaps with a same priority; and is more adaptive.

In a first example, the first indication information includes identifiers of a part of time units to be retained in the M time units, or the first indication information includes identifiers of a part of time units to be discarded in the M time units.

In other words, when the first indication information indicates a multi-sim gap to be retained, the first indication information may indicate an identifier of the multi-sim gap to be retained; or when the first indication information indicates a multi-sim gap that is not to be retained or that is to be discarded, the first indication information may indicate an identifier of the multi-sim gap that is not to be retained or that is to be discarded. There may be one or more multi-sim gaps to be retained, and there may be one or more multi-sim gaps to be discarded. This is not limited in this application.

For example, the UE assistance information message (that is, the first message) includes a multi-sim gap list expected/preferred by a UE, and further includes the first indication information indicating a multi-sim gap to be retained or discarded in multi-sim gaps expected/preferred by the UE. As shown in Table 4, it is assumed that a plurality of multi-sim gaps expected by the terminal device are respectively a periodic multi-sim gap #1, a periodic multi-sim gap #2, a periodic multi-sim gap #3, and an aperiodic multi-sim gap #4, and corresponding identifiers are respectively an identifier 0, an identifier 1, an identifier 2, and an identifier 3 (or an aperiodic gap). For example, if M=4, it indicates that a conflict exists in the four multi-sim gaps. When the first indication information indicates to retain the periodic multi-sim gap #1, the periodic multi-sim gap #3, and the aperiodic multi-sim gap #4, and indicates to discard the periodic multi-sim gap #2, when the first indication information indicates the multi-sim gap to be retained, the first indication information may include the identifiers of the periodic multi-sim gap #1, the periodic multi-sim gap #3, and the aperiodic multi-sim gap #4, that is, the identifier 0, the identifier 2, and the identifier 3 (or the aperiodic gap). Alternatively, when the first indication information indicates the multi-sim gap that is not to be retained or that is to be discarded, the first indication information may include the identifier of the periodic multi-sim gap #2, that is, the identifier 1.

**Table 4**

| UE assistance information message | |
|---|---|
| Multi-card gap list (MUSIM-GapPreferenceList) expected/preferred by a UE | Periodic multi-sim gap #1 (corresponding to an identifier 0) |
| | Periodic multi-sim gap #2 (corresponding to an identifier 1) |
| | Periodic multi-sim gap #3 (corresponding to an identifier 2) |
| | Aperiodic multi-sim gap #4 (corresponding to an identifier 3 or an aperiodic gap) |
| First indication information (multi-sim gap to be retained) | Identifier 0 |
| | Identifier 2 |
| | Identifier 3 or identifier for the aperiodic gap |
| First indication information (multi-sim gap to be discarded) | Identifier 1 |

In a second example, a value of the first indication information indicates a time unit to be retained or discarded. For example, the first indication information includes second indication information and third indication information, the second indication information corresponds to a first part of time units in the M time units, and the third indication information corresponds to a second part of time units in the M time units. The second indication information and the third indication information herein may be understood as the first indication information. In other words, each of the M conflicting time units in this implementation corresponds to one piece of first indication information, or each of a plurality of time units expected by the terminal device in this implementation corresponds to one piece of first indication information. If a value of the second indication information is a third value, and a value of the third indication information is a fourth value, it indicates to retain the first part of time units, and indicates to discard the second part of time units; or if a value of the second indication information is a fourth value, and a value of the third indication information is a third value, it indicates to discard the second part of time units, and indicates to retain the first part of time units. Alternatively, if a value of the second indication information is a third value, it indicates to retain the first part of time units; or if a value of the second indication information is a fourth value, it indicates to discard the first part of time units; and if a value of the third indication information is the third value, it indicates to retain the second part of time units; or if a value of the third indication information is the fourth value, it indicates to discard the second part of time units. In other words, when a value of first indication information corresponding to a time unit is the third value, it indicates that the time unit is to be retained; or when a value of first indication information corresponding to a time unit is the fourth value, it indicates that the time unit is to be discarded.

There may be one or more multi-sim gaps to be retained, and there may be one or more multi-sim gaps to be discarded. This is not limited in this application.

For example, the UE assistance information message (that is, the first message) includes a multi-sim gap list expected/preferred by a UE, and correspondingly includes one piece of first indication information for each multi-sim gap expected/preferred by the UE. As shown in Table 5, it is assumed that a plurality of multi-sim gaps expected by the terminal device are respectively a periodic multi-sim gap #1, a periodic multi-sim gap #2, a periodic multi-sim gap #3, and an aperiodic multi-sim gap #4, and corresponding identifiers are respectively an identifier 0, an identifier 1, and an identifier 2. For example, if M=4, it indicates that a conflict exists in the four multi-sim gaps. If the terminal device indicates to retain the periodic multi-sim gap #1, the periodic multi-sim gap #3, and the aperiodic multi-sim gap #4, and indicates to discard the periodic multi-sim gap #2, it indicates that values of first indication information corresponding to the periodic multi-sim gap #1, first indication information corresponding to the periodic multi-sim gap #3, and first indication information corresponding to the aperiodic multi-sim gap #4 are the third value, and a value of first indication information corresponding to the periodic multi-sim gap #2 is the fourth value.

**Table 5**

| UE assistance information message | |
|---|---|
| Multi-card gap list (MUSIM-GapPreferenceList) expected/preferred by a UE | Periodic multi-sim gap #1 (corresponding to an identifier 0) |
| | First indication information of a third value Periodic multi-sim gap #2 (corresponding to an identifier 1) |
| | First indication information of a fourth value |
| | Periodic multi-sim gap #3 (corresponding to an identifier 2) |
| | First indication information of the third value |
| | Aperiodic multi-sim gap #4 |
| | First indication information of the third value |

In a third example, existence of the first indication information indicates to discard a corresponding time unit, or non-existence of the first indication information indicates to retain a corresponding time unit. For example, the first indication information includes second indication information and third indication information, the second indication information corresponds to a first part of time units in the M time units, and the third indication information corresponds to a second part of time units in the M time units. The second indication information and the third indication information herein may be understood as the first indication information. In other words, each of the M conflicting time units in this implementation corresponds to one piece of first indication information, or each of a plurality of time units expected by the terminal device in this implementation corresponds to one piece of first indication information. If the first message does not include the second indication information, and includes the third indication information, it indicates to retain the first part of time units, and indicates to discard the second part of time units; or if the first message includes the second indication information, and does not include the third indication information, it indicates to discard the first part of time units, and indicates to retain the second part of time units. Alternatively, if the first message does not include the second indication information, it indicates to retain the first part of time units; or if the first message includes the second indication information, it indicates to discard the first part of time units; and if the first message does not include the third indication information, it indicates to retain the second part of time units; or if the first message includes the third indication information, it indicates to discard the second part of time units. In other words, when the first message does not include first indication information corresponding to a time unit, it indicates that the time unit is to be retained; or when the first message includes first indication information corresponding to a time unit, it indicates that the time unit is to be discarded.

There may be one or more multi-sim gaps to be retained, and there may be one or more multi-sim gaps to be discarded. This is not limited in this application.

For example, the UE assistance information message (that is, the first message) includes a multi-sim gap list expected/preferred by a UE, and correspondingly includes one piece of first indication information for each multi-sim gap expected/preferred by the UE. As shown in Table 6, it is assumed that a plurality of multi-sim gaps expected by the terminal device are respectively a periodic multi-sim gap #1, a periodic multi-sim gap #2, a periodic multi-sim gap #3, and an aperiodic multi-sim gap #4, and corresponding identifiers are respectively an identifier 0, an identifier 1, and an identifier 2. For example, if M=4, it indicates that a conflict exists in the four multi-sim gaps. If the terminal device indicates to retain the periodic multi-sim gap #1, the periodic multi-sim gap #3, and the aperiodic multi-sim gap #4, and indicates to discard the periodic multi-sim gap #2, it indicates that first indication information corresponding to the periodic multi-sim gap #1, first indication information corresponding to the periodic multi-sim gap #2, and first indication information corresponding to the aperiodic multi-sim gap #4 do not exist, and first indication information corresponding to the periodic multi-sim gap #2 exists.

**Table 6**

| UE assistance information message | |
|---|---|
| Multi-card gap list (MUSIM-GapPreferenceList) expected/preferred by a UE | Periodic multi-sim gap #1 (corresponding to an identifier 0) |
| | Periodic multi-sim gap #2 (corresponding to an identifier 1) |
| | First indication information that exists |
| | Periodic multi-sim gap #3 (corresponding to an identifier 2) |
| | Aperiodic multi-sim gap #4 |

The following describes, by using examples, specific implementations in a scenario in which the first indication information does not exist, to be specific, if the first message does not include the first indication information, the first indication information indicates to retain all of the M time units.

In a first implementation, the first message does not include the first indication information, that is, indicates to retain all of the M multi-sim gaps.

For example, as shown in Table 7, it is assumed that a plurality of multi-sim gaps expected by the terminal device are respectively a periodic multi-sim gap #1, a periodic multi-sim gap #2, and a periodic multi-sim gap #3, and corresponding identifiers are respectively an identifier 0, an identifier 1, and an identifier 2. If M=3, it indicates that a conflict exists in the three multi-sim gaps. Because the first message does not carry the first indication information, it indicates that the periodic multi-sim gap #1, the periodic multi-sim gap #2, and the periodic multi-sim gap #3 may all be retained.

**Table 7**

| UE assistance information message | |
|---|---|
| Multi-card gap list (MUSIM-GapPreferenceList) expected/preferred by a UE | Periodic multi-sim gap #1 (corresponding to an identifier 0) |
| | Periodic multi-sim gap #2 (corresponding to an identifier 1) |
| | Periodic multi-sim gap #3 (corresponding to an identifier 2) |

Optionally, for various implementations in the foregoing two scenarios, if conflicting multi-sim gaps include a periodic gap and an aperiodic gap, the aperiodic gap is to be preferentially retained by default, and all multi-sim gaps that conflict with the aperiodic gap are to be discarded, or all multi-sim gaps that cannot coexist with the aperiodic gap are to be discarded. The rule may be predefined in a protocol, or may be indicated by the network device. Optionally, the M conflicting multi-sim gaps indicated in the first message do not include an aperiodic gap. The terminal device and the network device directly determine, according to the foregoing rule, to retain the aperiodic gap without an additional indication. In other words, the first indication information indicates to retain a part of the M time units, and the first indication information does not need to provide an indication for the aperiodic gap. Alternatively, the M conflicting multi-sim gaps indicated in the first message include an aperiodic gap, and indicating, by using the first indication information, to retain the part of the M time units includes: indicating, by using the first indication information, to retain the aperiodic gap, that is, according to the foregoing possible implementation, definitely indicating to retain the aperiodic gap.

Optionally, in the foregoing implementations, if conflicting multi-sim gaps include a periodic gap and an aperiodic gap, the aperiodic gap is to be preferentially discarded by default. The rule may be predefined in a protocol, or may be indicated by the network device. Optionally, the M conflicting multi-sim gaps indicated in the first message do not include an aperiodic gap. The terminal device and the network device directly determine, according to the foregoing rule, to discard the aperiodic gap without an additional indication. In other words, the first indication information indicates to retain a part of the M time units, and the first indication information does not need to provide an indication for the aperiodic gap. Alternatively, the M conflicting multi-sim gaps indicated in the first message include an aperiodic gap, and indicating, by using the first indication information, to retain the part of the M time units includes: indicating, by using the first indication information, that the multi-sim gap to be retained does not include the aperiodic gap, that is, according to the foregoing possible implementation, definitely indicating to discard the aperiodic gap. When the aperiodic gap is to be discarded, if a conflict still exists in another periodic gap, a specific manner of determining one or more multi-sim gaps to be retained may be determined in the foregoing manner. Details are not described herein again. This is not specifically limited in this application.

S220: Optionally, the network device determines configuration information based on the first message.

For example, the configuration information indicates a multi-sim gap configured for the terminal device. The network device may configure the multi-sim gap by indicating multi-sim gap configuration information or multi-sim gap pattern (pattern) information. It should be understood that, the network device may finally configure a maximum of three periodic multi-sim gaps and one aperiodic multi-sim gap for the terminal device based on the first message sent by the terminal device, and the network device may select all or a part of the multi-sim gaps expected by the UE for configuration.

It should be noted that, the network device may determine, based on the first message, whether to configure a multi-sim gap for the terminal device. If the network device may determine to configure a multi-sim gap for the terminal device, the network device determines configuration information. In this case, step S220 is performed, and step S230 also needs to be performed. If the network device may determine not to configure a multi-sim gap for the terminal device, the network device does not need to determine configuration information. In this case, step S220 does not need to be performed, and step S230 does not need to be performed either.

In a first implementation, the first indication information indicates to retain a part of the M time units, and the part of time units are time units with high priorities or time units with small periodicities.

For example, it is assumed that there are four multi-sim gaps expected by the terminal device: a periodic multi-sim gap #1, a periodic multi-sim gap #2, a periodic multi-sim gap #3, and an aperiodic multi-sim gap #4. If M=2, the periodic multi-sim gap #1 conflicts with the periodic multi-sim gap #2. If a priority of the multi-sim gap #1 is higher than that of the multi-sim gap #2, the network device may determine, based on the first indication information, to retain the periodic multi-sim gap #1 with a higher priority, and discard the periodic multi-sim gap #2 with a lower priority.

In a second implementation, the first indication information indicates a time unit that cannot coexist, and the first indication information indicates that coexistence of a first part of time units and a second part of time units in the M time units is not allowed.

For example, it is assumed that there are four multi-sim gaps expected by the terminal device: a periodic multi-sim gap #1, a periodic multi-sim gap #2, a periodic multi-sim gap #3, and an aperiodic multi-sim gap #4. If M=2, the periodic multi-sim gap #1 conflicts with the periodic multi-sim gap #2.

In a first example, the first indication information includes an identifier of the periodic multi-sim gap #1 and an identifier of the periodic multi-sim gap #2, that is, an identifier 0 and an identifier 1.

In a second example, values of second indication information corresponding to the periodic multi-sim gap #1 and third indication information corresponding to the periodic multi-sim gap #2 are both a first value, and the first value indicates that coexistence of the periodic multi-sim gap #1 and the periodic multi-sim gap #2 is not allowed.

In a third example, the first message includes second indication information corresponding to the periodic multi-sim gap #1 and third indication information corresponding to the periodic multi-sim gap #2, to indicate that coexistence of the periodic multi-sim gap #1 and the periodic multi-sim gap #1 is not allowed.

Based on the examples provided above, the network device may determine, based on the first indication information, that the coexistence of the periodic multi-sim gap #1 and the periodic multi-sim gap #2 is not allowed, and determine to retain one of the periodic multi-sim gap #1 and the periodic multi-sim gap #2. For example, if a priority of the periodic multi-sim gap #1 is higher than that of the periodic multi-sim gap #2, the network device retains the periodic multi-sim gap #1 with a higher priority, and discards the periodic multi-sim gap #2 with a lower priority. That is, the periodic multi-sim gap #1, the periodic multi-sim gap #3, and the aperiodic multi-sim gap #4 are to be finally retained.

In a third implementation, the first indication information indicates to retain or discard a multi-sim gap. If the first indication information indicates that the multi-sim gap is to be retained, the multi-sim gap is retained, or if the first indication information indicates that the multi-sim gap is to be discarded, the multi-sim gap is discarded.

For example, it is assumed that there are four multi-sim gaps expected by the terminal device: a periodic multi-sim gap #1, a periodic multi-sim gap #2, a periodic multi-sim gap #3, and an aperiodic multi-sim gap #4. If M=3, the periodic multi-sim gap #1, the periodic multi-sim gap #2, and the periodic multi-sim gap #3 conflict.

In a first example, if the first indication information indicates to retain a multi-sim gap, the first indication information includes identifiers of a part of the M time units, for example, an identifier of the periodic multi-sim gap #1 and an identifier of the periodic multi-sim gap #3, that is, an identifier 0 and an identifier 2. Alternatively, the first indication information indicates to discard a multi-sim gap, and the first indication information includes identifiers of a part of time units other than the part of the M time units, for example, an identifier of the periodic multi-sim gap #2, that is, an identifier 1.

In a second example, when a value of second indication information corresponding to the periodic multi-sim gap #1 is a third value, and a value of third indication information corresponding to the periodic multi-sim gap #2 is a fourth value, it indicates to retain the periodic multi-sim gap #1, and indicates not to retain the periodic multi-sim gap #2. When a value of second indication information corresponding to the periodic multi-sim gap #1 is a fourth value, and a value of third indication information corresponding to the periodic multi-sim gap #2 is a third value, it indicates to retain the periodic multi-sim gap #2, and indicates not to retain the periodic multi-sim gap #1. The third value indicates to retain the multi-sim gap, and the fourth value indicates to discard the multi-sim gap.

In a third example, if the first message includes second indication information corresponding to the periodic multi-sim gap #1, and does not include third indication information corresponding to the periodic multi-sim gap #2, it indicates not to retain the periodic multi-sim gap #1 and indicates to retain the periodic multi-sim gap #2. Alternatively, if the first message does not include second indication information corresponding to the periodic multi-sim gap #1, and includes third indication information corresponding to the periodic multi-sim gap #2, it indicates to retain the periodic multi-sim gap #1, and indicates not to retain the periodic multi-sim gap #2.

Based on the examples provided above, the network device may determine, based on the first indication information, that coexistence of the periodic multi-sim gap #1 and the periodic multi-sim gap #2 is not allowed, and determine to retain one of the periodic multi-sim gap #1 and the periodic multi-sim gap #2. For example, if a priority of the periodic multi-sim gap #1 is higher than that of the periodic multi-sim gap #2, the network device retains the periodic multi-sim gap #1 with a higher priority, and discards the periodic multi-sim gap #2 with a lower priority. In addition, because coexistence of the periodic multi-sim gap #3 and the periodic multi-sim gap #1 and/or the periodic multi-sim gap #2 is allowed, the periodic multi-sim gap #3 may be retained, and the periodic multi-sim gap #1 and the periodic multi-sim gap #3 are to be finally retained.

Optionally, when priorities of a first part of time units in the M time units are the same as priorities of a second part of time units that conflict with the first part of time units in the M time units, the first indication information indicates to retain the first part of time units, and indicates not to retain the second part of time units; or the first indication information indicates not to retain the first part of time units, and indicates to retain the first part of time units.

For example, it is assumed that there are four multi-sim gaps expected by the terminal device: a periodic multi-sim gap #1, a periodic multi-sim gap #2, a periodic multi-sim gap #3, and an aperiodic multi-sim gap #4. If M=2, the periodic multi-sim gap #1 conflicts with the periodic multi-sim gap #2. Because the periodic multi-sim gap #1 and the periodic multi-sim gap #2 have a same priority, the network device may determine, based on the first indication information, a periodic multi-sim gap to be retained or discarded in the periodic multi-sim gap #1 and the periodic multi-sim gap #2.

S230: Optionally, the network device sends the configuration information to the terminal device, and correspondingly, the terminal device receives the configuration information from the network device.

For example, the network device includes, in the RRC reconfiguration message, the multi-sim gap configured for the terminal device. Further, after receiving the configured multi-sim gap, the terminal device may correctly use the configured multi-sim gap based on one or more multi-sim gaps that are determined to be retained or discarded in the terminal device.

According to the solution provided in this application, when a conflict occurs between multi-sim gaps, the first indication information indicates to the network device that all or a part of the conflicting multi-sim gaps are to be retained, to avoid discarding of a multi-sim gap that can be used, and avoid a waste of resources and a reduction in a system throughput caused by existence of a multi-sim gap that cannot be used, so as to improve resource utilization and ensure system transmission performance.

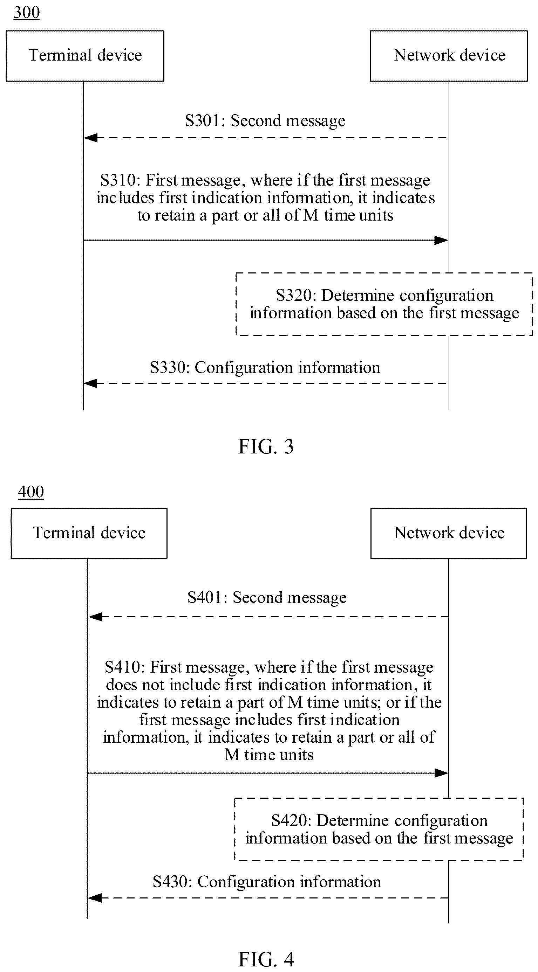

FIG. 3 is a schematic flowchart of a communication method 300 according to an embodiment of this application. As shown in FIG. 3, the method includes a plurality of steps below. For a part that is not described in detail, refer to an existing protocol. A difference from the foregoing method 200 lies in that a first message in the method 300 always carries first indication information. In the following embodiment, an implementation similar to that in the method 200 is not described in detail again, and may be used in combination.

S310: A terminal device sends the first message to a network device, and correspondingly, the network device receives the first message from the terminal device.

The first message indicates a plurality of time units expected by the terminal device, the plurality of time units include M conflicting time units, and M is an integer greater than or equal to 2. For example, the first message includes the first indication information, and the first indication information indicates to retain a part of the M time units, or the first indication information indicates to retain all of the M time units.

In an implementation, the M time units include N groups of conflicting time units, each of the N groups of time units includes a plurality of time units, and N is an integer greater than or equal to 1. In this case, the first indication information further indicates to retain a part of time units in each of P groups of time units, and the P groups of time units are a part or all of the N groups of time units.

It should be noted that, in a possible manner, the terminal device sends, to the network device, a message indicating a plurality of time units expected by the terminal device. If the plurality of time units expected by the terminal device include M conflicting time units, the message (that is, the first message) may include the first indication information. If the plurality of time units include M non-conflicting time units, the message may not include the first indication information. It may be understood that the message includes the first indication information only when the plurality of time units expected by the terminal device include the M conflicting time units. In another possible manner, the terminal device sends, to the network device, a message indicating a plurality of time units expected by the terminal device. Regardless of whether the plurality of time units expected by the terminal device include M conflicting time units, the message includes the first indication information. In other words, if the plurality of time units expected by the terminal device include the M conflicting time units, the message (that is, the first message) includes the first indication information.

Optionally, before step S310 is performed, the method 300 may further include step S301 below.

S301: The network device sends a second message to the terminal device, and correspondingly, the terminal device receives the second message from the network device. The second message indicates that the terminal device is allowed to send the first message to the network device.

For specific implementations of steps S310 and S301, respectively refer to related descriptions of steps S210 and S201 in the method 200. For brevity, details are not described herein again.

The following describes, by using examples, specific implementations in which the first indication information indicates to retain a part of the M time units. It should be understood that, in this scenario, not all of the M conflicting time units can be retained.

In a first implementation, the first indication information indicates to retain a part of the M time units, and the part of time units are a part of time units with high priorities.

In a second implementation, the first indication information indicates a time unit that cannot coexist in the M time units, the M time units include a first part of time units and a second part of time units, and the first indication information indicates that coexistence of the first part of time units and the second part of time units in the M time units is not allowed. In other words, if there is a time unit other than the first part of time units and the second part of time units in the M time units, the first indication information further indicates that coexistence of the time unit other than the first part of time units and the second part of time units in the M time units is allowed.

In a third implementation, the first indication information indicates to retain or discard a time unit. If the first indication information indicates to retain the time unit, the time unit is retained, or if the first indication information indicates to discard the time unit, the time unit is discarded.

In a fourth implementation, when priorities of a first part of time units in the M time units are the same as priorities of a second part of time units that conflict with the first part of time units in the M time units, the first indication information indicates to retain the first part of time units, and indicates not to retain the second part of time units; or the first indication information indicates not to retain the first part of time units, and indicates to retain the first part of time units.

It should be noted that, for specific examples of the implementations provided above, refer to related descriptions of step S210 in the method 200. For brevity, details are not described herein again.

The following describes, by using examples, specific implementations in which the first indication information indicates to retain all of the M time units.

In a first implementation, the first indication information indicates that coexistence of a first part of time units in the M time units and a second part of time units other than the first part of time units in the M time units is allowed. In other words, a sum of a quantity of the first part of time units and a quantity of the second part of time units is equal to M.

In other words, the first indication information indicates that coexistence of all of the M time units is allowed.

In a first example, the first indication information includes identifiers of all of the M time units.

For example, it is assumed that there are four multi-sim gaps expected by the terminal device: a periodic multi-sim gap #1, a periodic multi-sim gap #2, a periodic multi-sim gap #3, and an aperiodic multi-sim gap #4. If M=2, the periodic multi-sim gap #1 conflicts with the periodic multi-sim gap #2, and the first indication information may indicate to retain both the periodic multi-sim gap #1 and the periodic multi-sim gap #2. In this case, the first indication information includes an identifier of the periodic multi-sim gap #1 and an identifier of the periodic multi-sim gap #2, that is, an identifier 0 and an identifier 1.

In a second example, the first indication information includes second indication information and third indication information, the second indication information corresponds to a first time unit in all the time units, and the third indication information corresponds to a second time unit other than the first time unit in all the time units. Values of the second indication information and the third indication information are both a fifth value, and the fifth value indicates that coexistence of the first time unit and the second time unit is allowed.

For example, it is assumed that there are four multi-sim gaps expected by the terminal device: a periodic multi-sim gap #1, a periodic multi-sim gap #2, a periodic multi-sim gap #3, and an aperiodic multi-sim gap #4. If M=2, the periodic multi-sim gap #1 conflicts with the periodic multi-sim gap #2, the second indication information corresponds to the periodic multi-sim gap #1, and the third indication information corresponds to the periodic multi-sim gap #2. The first indication information may indicate to retain both the periodic multi-sim gap #1 and the periodic multi-sim gap #2. In this case, values of the second indication information and the third indication information are both a fifth value, and the fifth value indicates that coexistence of the periodic multi-sim gap #1 and the periodic multi-sim gap #2 is allowed.

In a second implementation, the first indication information indicates that a multi-sim gap is to be retained or discarded. If the first indication information indicates that the multi-sim gap is to be retained, the multi-sim gap is retained, or if the first indication information indicates that the multi-sim gap is to be discarded, the multi-sim gap is discarded.

In a first example, the first indication information includes identifiers of the M time units.

For example, it is assumed that there are four multi-sim gaps expected by the terminal device: a periodic multi-sim gap #1, a periodic multi-sim gap #2, a periodic multi-sim gap #3, and an aperiodic multi-sim gap #4. If M=2, the periodic multi-sim gap #1 conflicts with the periodic multi-sim gap #2, and the first indication information may indicate to retain both the periodic multi-sim gap #1 and the periodic multi-sim gap #2. In this case, the first indication information includes an identifier of the periodic multi-sim gap #1 and an identifier of the periodic multi-sim gap #2, that is, an identifier 0 and an identifier 1.

In a second example, the first indication information includes second indication information and third indication information, the second indication information corresponds to a first time unit in all the time units, and the third indication information corresponds to a second time unit other than the first time unit in all the time units.

For example, it is assumed that there are four multi-sim gaps expected by the terminal device: a periodic multi-sim gap #1, a periodic multi-sim gap #2, a periodic multi-sim gap #3, and an aperiodic multi-sim gap #4. If M=2, the periodic multi-sim gap #1 conflicts with the periodic multi-sim gap #2, the second indication information corresponds to the periodic multi-sim gap #1, and the third indication information corresponds to the periodic multi-sim gap #2. The first indication information may indicate to retain both the periodic multi-sim gap #1 and the periodic multi-sim gap #2, and values of the second indication information and the third indication information are both a sixth value, and the sixth value indicates to retain the first time unit and the second time unit.

It should be noted that, for the implementations provided above, refer to related descriptions of step S210 in the method 200. For brevity, details are not described herein again.

Optionally, in the foregoing two implementations, if conflicting multi-sim gaps include a periodic gap and an aperiodic gap, the aperiodic gap is to be preferentially retained by default, and all multi-sim gaps that conflict with the aperiodic gap are to be discarded, or all multi-sim gaps that cannot coexist with the aperiodic gap are to be discarded. Refer to related descriptions of step S210 in the method 200.

Optionally, in the foregoing implementations, if conflicting multi-sim gaps include a periodic gap and an aperiodic gap, the aperiodic gap is to be preferentially discarded by default. For a specific implementation, refer to related descriptions of step S210 in the method 200.

S320: Optionally, the network device determines configuration information based on the first message.

S330: Optionally, the network device sends the configuration information to the terminal device, and correspondingly, the terminal device receives the configuration information from the network device.

For specific implementations of steps S320 and S330, refer to related descriptions of steps S220 and S230 in the method 200. For brevity, details are not described herein again.

According to the solution provided in this application, when a conflict occurs between multi-sim gaps, the first indication information indicates to the network device that all or a part of the conflicting multi-sim gaps are to be retained, to avoid discarding of a multi-sim gap that can be used, and avoid a waste of resources and a reduction in a system throughput caused by existence of a multi-sim gap that cannot be used, so as to improve resource utilization and ensure system transmission performance.

It should be noted that, in the method shown in FIG. 2, if the first message includes the first indication information, the first indication information indicates to retain a part of the M time units; or if the first message does not include the first indication information, it indicates to retain the M time units. In other words, whether to retain all or a part of the M conflicting time units is determined depending on whether the first indication information exists. In comparison, the method shown in FIG. 4 is similar to that in FIG. 2.

FIG. 4 is a schematic flowchart of a communication method 400 according to an embodiment of this application. As shown in FIG. 4, the method includes a plurality of steps below. For a part that is not described in detail, refer to an existing protocol.

S410: A terminal device sends a first message to a network device, and correspondingly, the network device receives the first message from the terminal device.

The first message indicates a plurality of time units expected by the terminal device, the plurality of time units include M conflicting time units, and M is an integer greater than or equal to 2. For example, if the first message does not include first indication information, the first indication information indicates to retain a part of the M time units; or if the first message includes first indication information, it indicates to retain a part or all of the M time units.

Optionally, before step S410 is performed, the method 400 may further include step S401 below. To be specific, before the terminal device sends the first message to the network device, the terminal device may be indicated to report the first message.

S401: The network device sends a second message to the terminal device, and correspondingly, the terminal device receives the second message from the network device. The second message indicates that the terminal device is allowed to send the first message to the network device.

For specific implementations of steps S410 and S401, refer to steps S210 and S201 in the method 200. For brevity, details are not described herein again.

The following describes, by using examples, specific implementations in a scenario in which the first indication information does not exist, to be specific, if the first message does not include the first indication information, the first message indicates to retain a part of the M time units. It should be understood that, in this scenario, not all of the M conflicting time units can be retained.

Optionally, when a conflict exists between a plurality of multi-sim gaps, it is specified (for example, predefined in a protocol) that a multi-sim gap with a high priority is to be preferentially retained, or a multi-sim gap with a low priority is to be preferentially discarded. Therefore, when the first message does not include the first indication information, for the plurality of conflicting multi-sim gaps, usually, a multi-sim gap to be retained is a multi-sim gap with a high priority, or a multi-sim gap to be discarded is a multi-sim gap with a low priority.

Optionally, a priority of a time unit may be a priority corresponding to a multi-sim gap expected by the terminal device, or may be a priority of a multi-sim gap configured by the network device for the terminal device. Optionally, if the terminal device indicates the priority corresponding to the multi-sim gap expected by the terminal device, the priority is used as a determining priority; or if the terminal device does not indicate the priority corresponding to the multi-sim gap expected by the terminal device, the priority of the multi-sim gap configured by the network device for the terminal device is used as a determining priority.

Optionally, a part of time units with high priorities that are to be retained may be one or more time units. In other words, one time unit with a highest priority may be retained, or the first several time units with higher priorities may be retained. For example, one or more time units to be retained may be predefined in a protocol or configured by the network device.

It should be understood that, this implementation is mainly applicable to a case in which a plurality of conflicting multi-sim gaps with different priorities exist, and a plurality of conflicting multi-sim gaps with a same priority cannot be supported. Optionally, it is specified that different multi-sim gaps correspond to different priorities.

For example, as shown in Table 8, it is assumed that a plurality of multi-sim gaps expected by the terminal device are respectively a periodic multi-sim gap #1, a periodic multi-sim gap #2, and a periodic multi-sim gap #3. If M=3, it indicates that a conflict exists in the three multi-sim gaps. Because the first message does not carry the first indication information, it indicates that a part of the periodic multi-sim gap #1, the periodic multi-sim gap #2, and the periodic multi-sim gap #3 may be retained. Optionally, if a priority of the periodic multi-sim gap #1 is the highest, a priority of the periodic multi-sim gap #2 is the second highest, and a priority of the periodic multi-sim gap #3 is the lowest, the network device may select, based on the priorities, the periodic multi-sim gap #1, and discard the periodic multi-sim gap #2 and the periodic multi-sim gap #3; or may retain the periodic multi-sim gap #1 and the periodic multi-sim gap #2, and discard the periodic multi-sim gap #3. One or two specific multi-sim gaps to be retained may be predefined in a protocol or configured by the network device.

**Table 8**

| UE assistance information message | |
|---|---|
| Multi-card gap list (MUSIM-GapPreferenceList) expected/preferred by a UE | Periodic multi-sim gap #1 |
| | Periodic multi-sim gap #2 |
| | Periodic multi-sim gap #3 |

Optionally, the first message indicates to retain a part of the M time units, and the part of the time units are a part of time units with small periodicities.

Optionally, when a conflict exists between a plurality of multi-sim gaps, it is specified (for example, predefined in a protocol) that a multi-sim gap with a small periodicity is to be preferentially retained, or a multi-sim gap with a large periodicity is to be preferentially discarded. Therefore, when the terminal device indicates, by using the first indication information, to retain or discard a part of the multi-sim gaps, usually, a multi-sim gap to be retained is a multi-sim gap with a small periodicity, or a multi-sim gap to be discarded is a multi-sim gap with a large periodicity.

Optionally, a part of time units with small periodicities that are to be retained may be one or more time units. In other words, one time unit with a smallest periodicity may be retained, or the first several time units with smallest periodicities may be retained. For example, one or more time units to be retained may be predefined in a protocol. It should be understood that, this implementation is mainly applicable to a case in which a plurality of conflicting multi-sim gaps with different periodicities exist, and a plurality of conflicting multi-sim gaps with a same periodicity cannot be supported. Optionally, it is specified that different multi-sim gaps need to correspond to different periodicities.

It should be noted that, for the plurality of conflicting multi-sim gaps, the foregoing implementations of determining, based on priorities, a multi-sim gap to be retained or discarded and determining, based on periodicities, a multi-sim gap to be retained or discarded may be implemented independently or in combination. This is not limited in this application. For example, there are three conflicting multi-sim gaps, for example, a multi-sim gap #1, a multi-sim gap #2, and a multi-sim gap #3. Priorities of the multi-sim gap #1, the multi-sim gap #2, and the multi-sim gap #3 are in descending order, and periodicities of the multi-sim gap #1, the multi-sim gap #2, and the multi-sim gap #3 are in ascending order. In this case, it may be determined that the multi-sim gap #1 is to be retained, and the multi-sim gap #2 and the multi-sim gap #3 are to be discarded; or the multi-sim gap #1 and the multi-sim gap #2 are to be retained, and the multi-sim gap #3 is to be discarded.

The following describes, by using examples, specific implementations in a scenario in which the first indication information exists, to be specific, if the first message includes the first indication information, the first indication information indicates to retain a part or all of the M time units. It should be understood that, in this scenario, all of the M conflicting time units may be retained.

In a first implementation, the first message includes the first indication information, that is, indicates to retain all of the M multi-sim gaps.

For example, the first indication information may be 1-bit indication information. For example, if M=2, the conflicting multi-sim gaps are a multi-sim gap #1 and a multi-sim gap #2, and existence of the first indication information indicates that the multi-sim gap #1 and the multi-sim gap #2 are to be retained.

As shown in Table 9, it is assumed that a plurality of multi-sim gaps expected by the terminal device are respectively a periodic multi-sim gap #1, a periodic multi-sim gap #2, and a periodic multi-sim gap #3. If M=3, it indicates that a conflict exists in the three multi-sim gaps. Because the first message carries the first indication information, it indicates that the periodic multi-sim gap #1, the periodic multi-sim gap #2, and the periodic multi-sim gap #3 may all be retained.

**Table 9**

| UE assistance information message | |
|---|---|
| Multi-card gap list (MUSIM-GapPreferenceList) expected/preferred by a UE | Periodic multi-sim gap #1 |
| | Periodic multi-sim gap #2 |
| | Periodic multi-sim gap #3 |

In a second implementation, the first indication information indicates a time unit that cannot coexist in the M time units, the M time units include a first part of time units and a second part of time units, and the first indication information indicates that coexistence of the first part of time units and the second part of time units in the M time units is not allowed. In other words, if there is a time unit other than the first part of time units and the second part of time units in the M time units, the first indication information further indicates that coexistence of the time unit other than the first part of time units and the second part of time units in the M time units is allowed.

Optionally, a sum of a quantity of the first part of time units and a quantity of the second part of time units is less than or equal to M. It should be understood that, the first indication information indicates a multi-sim gap that cannot coexist. For example, a first part of multi-sim gaps and a second part of multi-sim gaps in the M multi-sim gaps cannot coexist. When a conflict exists in the multi-sim gap that cannot coexist and that is indicated by the first indication information, according to a specification (for example, predefinition in a protocol), a multi-sim gap with a high priority may be retained, or a multi-sim gap with a low priority may be discarded. It should be noted that, if the first indication information indicates only one multi-sim gap that cannot coexist, the multi-sim gap may be discarded; or if there are more than two indicated multi-sim gaps that cannot coexist, a multi-sim gap with a highest priority is to be preferentially retained, and one or more other multi-sim gaps with lower priorities are to be discarded.

Optionally, a priority of a time unit may be a priority corresponding to a multi-sim gap expected by the terminal device, or may be a priority of a multi-sim gap configured by the network device for the terminal device. Optionally, if the terminal device indicates the priority corresponding to the multi-sim gap expected by the terminal device, the priority is used as a determining priority; or if the terminal device does not indicate the priority corresponding to the multi-sim gap expected by the terminal device, the priority of the multi-sim gap configured by the network device for the terminal device is used as a determining priority.

Optionally, a part of time units with high priorities that are to be retained may be one or more time units. In other words, one time unit with a highest priority may be retained, or the first several time units with highest priorities may be retained. For example, one or more time units to be retained may be predefined in a protocol.

For example, if M=2, the conflicting multi-sim gaps are respectively a multi-sim gap #1 and a multi-sim gap #2. The first indication information indicates that coexistence of the multi-sim gap #1 and the multi-sim gap #2 is not allowed. This means that one of the multi-sim gap #1 and the multi-sim gap #2 is to be retained. For example, if a priority of the multi-sim gap #1 is higher than that of the multi-sim gap #2, the multi-sim gap #1 with a higher priority is to be retained, and the multi-sim gap #2 with a lower priority is to be discarded.

It should be understood that, this implementation is mainly applicable to a case in which a plurality of conflicting multi-sim gaps with different priorities exist, and a plurality of conflicting multi-sim gaps with a same priority cannot be supported. In addition, this implementation is not applicable to a case in which a plurality of pairs of conflicting multi-sim gaps exist and cannot be all retained. For example, a multi-sim gap #1 conflicts with a multi-sim gap #2 but only one of the two gaps is to be retained, and a multi-sim gap #3 conflicts with a multi-sim gap #4 but only one of the two gaps is to be retained. The first indication information is not applicable to the foregoing case. Optionally, it is specified that different multi-sim gaps need to correspond to different priorities.

In a first example, the first indication information indicates an identifier of a time unit that cannot coexist. For example, the first indication information includes identifiers of the first part of time units and identifiers of the second part of time units, that is, the first indication information carries the identifiers of the first part of time units and the identifiers of the second part of time units, to indicate that the first part of time units and the second part of time units cannot coexist.

For a specific implementation of the first example, refer to the first example in the second implementation of step S210 in the method 200. For brevity, details are not described herein again.

In a second example, a value of the first indication information indicates a time unit that cannot coexist. For example, the first indication information includes second indication information and third indication information, the second indication information corresponds to the first part of time units, and the third indication information corresponds to the second part of time units. The second indication information and the third indication information herein may be understood as the first indication information. In other words, each of the M conflicting time units in this implementation corresponds to one piece of first indication information, or each of a plurality of time units expected by the terminal device in this implementation corresponds to one piece of first indication information. If values of the second indication information and the third indication information are both a first value, the first value indicates that the coexistence of the first part of time units and the second part of time units is not allowed. To be specific, values of first indication information corresponding to the first part of time units and first indication information corresponding to the second part of time units are both the first value, to indicate that the coexistence of the first part of time units and the second part of time units is not allowed. Values of the second indication information and the third indication information are both a second value, and the second value indicates that the coexistence of the first part of time units and the second part of time units is allowed. To be specific, values of first indication information corresponding to the first part of time units and first indication information corresponding to the second part of time units are both the second value, to indicate that the coexistence of the first part of time units and the second part of time units is allowed.

For a specific implementation of the first example, refer to the second example in the second implementation of step S210 in the method 200. For brevity, details are not described herein again.

In a third example, non-existence of the first indication information indicates a time unit that cannot coexist. For example, the first indication information includes second indication information and third indication information, the second indication information corresponds to the first part of time units, and the third indication information corresponds to the second part of time units. The second indication information and the third indication information herein may be understood as the first indication information. In other words, each of the M conflicting time units in this implementation corresponds to one piece of first indication information, or each of a plurality of time units expected by the terminal device in this implementation corresponds to one piece of first indication information. If the first message does not include the second indication information or the third indication information, it indicates that the coexistence of the first part of time units and the second part of time units is not allowed. If the first message includes the second indication information and the third indication information, it indicates that the coexistence of the first part of time units and the second part of time units is allowed.

There may be one or more multi-sim gaps that cannot coexist. This is not limited in this application.

For example, a UE assistance information message (that is, the first message) includes a multi-sim gap list expected/preferred by a UE, and correspondingly includes one piece of first indication information for each multi-sim gap expected/preferred by the UE. As shown in Table 11, it is assumed that a plurality of multi-sim gaps expected by the terminal device are respectively a periodic multi-sim gap #1, a periodic multi-sim gap #2, a periodic multi-sim gap #3, and an aperiodic multi-sim gap #4, and corresponding identifiers are respectively an identifier 0, an identifier 1, and an identifier 2. For example, if M=4, it indicates that a conflict exists in the four multi-sim gaps. When the first indication information indicates that coexistence of the periodic multi-sim gap #1 and the periodic multi-sim gap #3 is not allowed, in the UE assistance information message, neither second indication information corresponding to the periodic multi-sim gap #1 nor third indication information corresponding to the periodic multi-sim gap #3 exists. This means that one of the periodic multi-sim gap #1 and the periodic multi-sim gap #3 is to be retained. For example, if a priority of the periodic multi-sim gap #1 is higher than that of the periodic multi-sim gap #3, the periodic multi-sim gap #1 with a higher priority is to be preferentially retained, and the multi-sim gap #3 with a lower priority is to be discarded. In other words, in this case, coexistence of the periodic multi-sim gap #2 and the aperiodic multi-sim gap #4 is allowed, and the periodic multi-sim gap #2 and the aperiodic multi-sim gap #4 may be retained. For example, first indication information corresponding to the periodic multi-sim gap #2 and first indication information corresponding to the aperiodic multi-sim gap #4 exist.

**Table 10**

| UE assistance information message | |
|---|---|
| Multi-card gap list (MUSIM-GapPreferenceList) expected/preferred by a UE | Periodic multi-sim gap #1 (corresponding to an identifier 0) |
| | Periodic multi-sim gap #2 (corresponding to an identifier 1) |
| | First indication information that exists |
| | Periodic multi-sim gap #3 (corresponding to an identifier 2) |
| | Aperiodic multi-sim gap #4 |
| | First indication information that exists |

In a third implementation, the first indication information indicates to retain or discard a time unit. If the first indication information indicates to retain the time unit, the time unit is retained, or if the first indication information indicates to discard the time unit, the time unit is discarded.

For example, the first indication information indicates a time unit to be retained or discarded in the M time units, or the first indication information indicates a time unit to be retained or discarded in a plurality of time units expected by the terminal device.

It should be understood that, this implementation is applicable to a plurality of conflicting multi-sim gaps with different priorities, and is also applicable to a plurality of conflicting multi-sim gaps with a same priority; and is more adaptive.

In a first example, the first indication information includes identifiers of a part of time units to be retained in the M time units, or the first indication information includes identifiers of a part of time units to be discarded in the M time units.

For a specific implementation of the first example, refer to the first example in the third implementation of step S210 in the method 200. For brevity, details are not described herein again.

In a second example, a value of the first indication information indicates a time unit to be retained or discarded. For example, the first indication information includes second indication information and third indication information, the second indication information corresponds to a first part of time units in the M time units, and the third indication information corresponds to a second part of time units in the M time units. The second indication information and the third indication information herein may be understood as the first indication information. In other words, each of the M conflicting time units in this implementation corresponds to one piece of first indication information, or each of a plurality of time units expected by the terminal device in this implementation corresponds to one piece of first indication information. If a value of the second indication information is a third value, and a value of the third indication information is a fourth value, it indicates to retain the first part of time units, and indicates to discard the second part of time units; or if a value of the second indication information is a fourth value, and a value of the third indication information is a third value, it indicates to discard the second part of time units, and indicates to retain the first part of time units. Alternatively, if a value of the second indication information is a third value, it indicates to retain the first part of time units; or if a value of the second indication information is a fourth value, it indicates to discard the first part of time units; and if a value of the third indication information is the third value, it indicates to retain the second part of time units; or if a value of the third indication information is the fourth value, it indicates to discard the second part of time units. In other words, when a value of first indication information corresponding to a time unit is the third value, it indicates that the time unit is to be retained; or when a value of first indication information corresponding to a time unit is the fourth value, it indicates that the time unit is to be discarded.

For a specific implementation of the first example, refer to the second example in the third implementation of step S210 in the method 200. For brevity, details are not described herein again.

In a third example, existence of the first indication information indicates to retain a corresponding time unit, or non-existence of the first indication information indicates to discard a corresponding time unit. For example, the first indication information includes second indication information and third indication information, the second indication information corresponds to a first part of time units in the M time units, and the third indication information corresponds to a second part of time units in the M time units. The second indication information and the third indication information herein may be understood as the first indication information. In other words, each of the M conflicting time units in this implementation corresponds to one piece of first indication information, or each of a plurality of time units expected by the terminal device in this implementation corresponds to one piece of first indication information. If the first message includes the second indication information, and does not include the third indication information, it indicates to retain the first part of time units, and indicates to discard the second part of time units; or if the first message does not include the second indication information, and does not include the third indication information, it indicates to discard the first part of time units, and indicates to retain the second part of time units. Alternatively, if the first message includes the second indication information, it indicates to retain the first part of time units; or if the first message does not include the second indication information, it indicates to discard the first part of time units; and if the first message includes the third indication information, it indicates to retain the second part of time units; or if the first message does not include the third indication information, it indicates to discard the second part of time units. In other words, when the first message includes first indication information corresponding to a time unit, it indicates that the time unit is to be retained; or when the first message does not include first indication information corresponding to a time unit, it indicates that the time unit is to be discarded.

There may be one or more multi-sim gaps to be retained, and there may be one or more multi-sim gaps to be discarded. This is not limited in this application.

For example, a UE assistance information message (that is, the first message) includes a multi-sim gap list expected/preferred by a UE, and correspondingly includes one piece of first indication information for each multi-sim gap expected/preferred by the UE. As shown in Table 6, it is assumed that a plurality of multi-sim gaps expected by the terminal device are respectively a periodic multi-sim gap #1, a periodic multi-sim gap #2, a periodic multi-sim gap #3, and an aperiodic multi-sim gap #4, and corresponding identifiers are respectively an identifier 0, an identifier 1, and an identifier 2. For example, if M=4, it indicates that a conflict exists in the four multi-sim gaps. If the terminal device indicates to retain the periodic multi-sim gap #1, the periodic multi-sim gap #3, and the aperiodic multi-sim gap #4, and indicates to discard the periodic multi-sim gap #2, it indicates that first indication information corresponding to the periodic multi-sim gap #1, first indication information corresponding to the periodic multi-sim gap #2, and first indication information corresponding to the aperiodic multi-sim gap #4 exist, and first indication information corresponding to the periodic multi-sim gap #2 does not exist.

**Table 11**

| UE assistance information message | |
|---|---|
| Multi-card gap list (MUSIM-GapPreferenceList) expected/preferred by a UE | Periodic multi-sim gap #1 (corresponding to an identifier 0) |
| | First indication information that exists |
| | Periodic multi-sim gap #2 (corresponding to an identifier 1) |
| | Periodic multi-sim gap #3 (corresponding to an identifier 2) |
| | First indication information that exists |
| | Aperiodic multi-sim gap #4 |
| | First indication information that exists |

Optionally, in the foregoing two implementations, if conflicting multi-sim gaps include a periodic gap and an aperiodic gap, the aperiodic gap is to be preferentially retained by default, and all multi-sim gaps that conflict with the aperiodic gap are to be discarded, or all multi-sim gaps that cannot coexist with the aperiodic gap are to be discarded. Refer to related descriptions of step S210 in the method 200.

Optionally, in the foregoing implementations, if conflicting multi-sim gaps include a periodic gap and an aperiodic gap, the aperiodic gap is to be preferentially discarded by default. For a specific implementation, refer to related descriptions of step S210 in the method 200.

S420: Optionally, the network device determines configuration information based on the first message.

For example, the configuration information indicates a multi-sim gap configured for the terminal device. The network device may configure the multi-sim gap by indicating multi-sim gap configuration information or multi-sim gap pattern (pattern) information. It should be understood that, the network device may finally configure a maximum of three periodic multi-sim gaps and one aperiodic multi-sim gap for the terminal device based on the first message sent by the terminal device, and the network device may select all or a part of the multi-sim gaps expected by the UE for configuration.

It should be noted that, the network device may determine, based on the first message, whether to configure a multi-sim gap for the terminal device. If the network device may determine to configure a multi-sim gap for the terminal device, the network device determines configuration information. In this case, step S220 is performed, and step S230 also needs to be performed. If the network device may determine not to configure a multi-sim gap for the terminal device, the network device does not need to determine configuration information. In this case, step S220 does not need to be performed, and step S230 does not need to be performed either.

S430: Optionally, the network device sends the configuration information to the terminal device, and correspondingly, the terminal device receives the configuration information from the network device.

For example, the network device includes, in an RRC reconfiguration message, the multi-sim gap configured for the terminal device. Further, after receiving the configured multi-sim gap, the terminal device may correctly use the configured multi-sim gap based on one or more multi-sim gaps that are determined to be retained or discarded in the terminal device.

According to the solution provided in this application, when a conflict occurs between multi-sim gaps, the first indication information indicates to the network device that all or a part of the conflicting multi-sim gaps are to be retained, to avoid discarding of a multi-sim gap that can be used, and avoid a waste of resources and a reduction in a system throughput caused by existence of a multi-sim gap that cannot be used, so as to improve resource utilization and ensure system transmission performance.

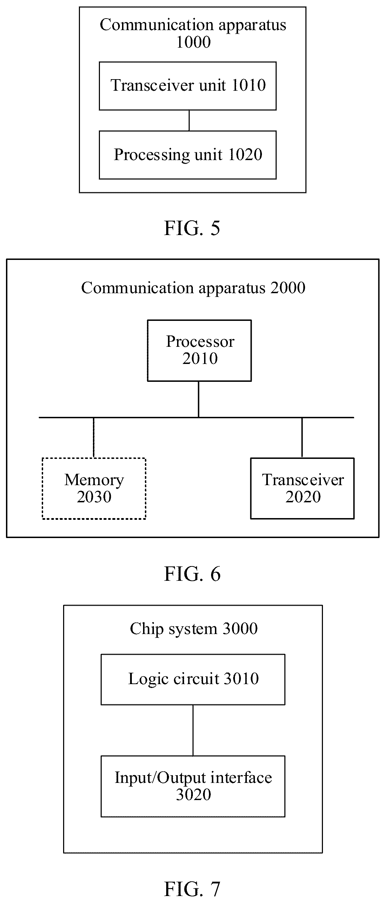

The foregoing describes in detail embodiments of a communication method side of this application with reference to FIG. 1 to FIG. 4. The following describes in detail embodiments of a communication apparatus side of this application with reference to FIG. 5 and FIG. 6. It should be understood that, descriptions of the apparatus embodiments correspond to the descriptions of the method embodiments. Therefore, for a part that is not described in detail, refer to the foregoing method embodiments.

FIG. 5 is a schematic block diagram of a communication apparatus 1000 according to an embodiment of this application. As shown in FIG. 5, the apparatus 1000 may include a transceiver unit 1010 and a processing unit 1020. The transceiver unit 1010 may communicate with the outside, and the processing unit 1020 is configured to process data. The transceiver unit 1010 may also be referred to as a communication interface or a receiving/sending unit.

In a possible design, the apparatus 1000 may implement corresponding steps or procedures performed by the terminal device (for example, the UE 1) in the foregoing method embodiments. The processing unit 1020 is configured to perform processing related operations of the terminal device in the foregoing method embodiments, and the transceiver unit 1010 is configured to perform sending/receiving related operations of the terminal device in the foregoing method embodiments.

In another possible design, the apparatus 1000 may implement corresponding steps or procedures performed by the network device (for example, the UE 2) in the foregoing method embodiments. The transceiver unit 1010 is configured to perform sending/receiving related operations of the network device in the foregoing method embodiments, and the processing unit 1020 is configured to perform processing related operations of the network device in the foregoing method embodiments.

It should be understood that, the device 1000 herein is implemented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the device 1000 may be specifically a transmit end in the foregoing embodiments, and may be configured to perform procedures and/or steps corresponding to the transmit end in the foregoing method embodiments; or the device 1000 may be specifically a receive end in the foregoing embodiments, and may be configured to perform procedures and/or steps corresponding to the receive end in the foregoing method embodiments. To avoid repetition, details are not described herein again.

The device 1000 in the foregoing solutions has a function of implementing corresponding steps performed by the transmit end in the foregoing methods. Alternatively, the device 1000 in the foregoing solutions has a function of implementing corresponding steps performed by the receive end in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to respectively perform sending/receiving operations and related processing operations in the method embodiments.

In addition, the transceiver unit may alternatively be a transceiver circuit (which, for example, may include a receiving circuit and a sending circuit), and the processing unit may be a processing circuit. In this embodiment of this application, the apparatus in FIG. 5 may be the receive end or the transmit end in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 6 is a schematic block diagram of a communication apparatus 2000 according to an embodiment of this application. As shown in FIG. 6, the apparatus 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the apparatus 2000 may further include a memory 2030. The memory 2030 communicates with the processor 2010 and the transceiver 2020 through internal connection paths. The memory 2030 is configured to store instructions, and the processor 2010 may execute the instructions stored in the memory 2030.

In a possible implementation, the apparatus 2000 is configured to implement procedures and steps corresponding to the terminal device (for example, the UE 1) in the foregoing method embodiments.

In another possible implementation, the apparatus 2000 is configured to implement procedures and steps corresponding to the network device (for example, the UE 2) in the foregoing method embodiments.

It should be understood that, the device 2000 may be specifically a transmit end or a receive end in the foregoing embodiments, or may be a chip or a chip system. Correspondingly, the transceiver 2020 may be a transceiver circuit of the chip. This is not limited herein. Specifically, the device 2000 may be configured to perform steps and/or procedures corresponding to the transmit end or the receive end in the foregoing method embodiments.

Optionally, the memory 2030 may include a read-only memory and a random access memory, and provide instructions and data for the processor. A part of the memory may further include a non-volatile random access memory. For example, the memory may further store information about a device type. The processor 2010 may be configured to execute the instructions stored in the memory. When the processor 2010 executes the instructions stored in the memory, the processor 2010 is configured to perform steps and/or procedures in the foregoing method embodiments corresponding to the transmit end or the receive end.

In an implementation process, steps in the foregoing methods may be implemented by using a hardware integrated logical circuit in the processor, or by using instructions in a form of software. The steps in the methods disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in this embodiment of this application may be an integrated circuit chip, and has a signal processing capability. In an implementation process, steps in the foregoing method embodiments may be implemented by using a hardware integrated logical circuit in the processor, or by using instructions in a form of software. The processor may be a general-purpose processor, a digital signal processor, an application-specific integrated circuit, a field programmable gate array or another programmable logic device, a discrete gate or transistor logic device, or a discrete hardware component. The processor in this embodiment of this application may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that, the memory of the systems and the methods described in this specification includes but is not limited to these and any memory of another appropriate type.

FIG. 7 is a block diagram of a chip system 3000 according to an embodiment of this application. As shown in FIG. 7, the chip system 3000 (which may also be referred to as a processing system) includes a logic circuit 3010 and an input/output interface (input/output interface) 3020.

The logic circuit 3010 may be a processing circuit in the chip system 3000. The logic circuit 3010 may be coupled and connected to a storage unit, and invoke instructions in the storage unit, to enable the chip system 3000 to implement the methods and the functions in embodiments of this application. The input/output interface 3020 may be an input/output circuit in the chip system 3000, and outputs information processed by the chip system 3000, or inputs to-be-processed data or signaling information to the chip system 3000 for processing.

In a solution, the chip system 3000 is configured to implement operations performed by the terminal device in the foregoing method embodiments.

For example, the logic circuit 3010 is configured to implement processing related operations performed by the terminal device in the foregoing method embodiments, for example, processing related operations performed by the terminal device in the embodiment shown in FIG. 2, FIG. 3, or FIG. 4; and the input/output interface 3020 is configured to implement sending and/or receiving related operations performed by the terminal device in the foregoing method embodiments, for example, sending and/or receiving related operations performed by the terminal device in the embodiment shown in FIG. 2, FIG. 3, or FIG. 4.

For another example, the logic circuit 3010 is configured to implement processing related operations performed by the network device in the foregoing method embodiments, for example, processing related operations performed by the network device in the embodiment shown in FIG. 2, FIG. 3, or FIG. 4; and the input/output interface 3020 is configured to implement sending and/or receiving related operations performed by the network device in the foregoing method embodiments, for example, sending and/or receiving related operations performed by the network device in the embodiment shown in FIG. 2, FIG. 3, or FIG. 4.

An embodiment of this application further provides a computer-readable storage medium. The computer-readable storage medium stores computer instructions for implementing a method performed by the terminal device (for example, the terminal device, or for another example, the network device) in the foregoing method embodiments.

An embodiment of this application further provides a computer program product, including instructions. When the instructions are executed by a computer, the method performed by the terminal device (for example, the terminal device, or for another example, the network device) in the foregoing method embodiments is implemented.

An embodiment of this application further provides a communication system. The communication system includes the terminal device and the network device in the foregoing embodiments.

For explanations and beneficial effects of related content of any one of the apparatuses provided above, refer to the corresponding method embodiments provided above. Details are not described herein again.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that, the disclosed system, apparatus, and method may be implemented in other manners. For example, the described apparatus embodiment is merely an example. For example, the foregoing unit division is merely logical function division and there may be another division manner in an actual implementation. For example, a plurality of units or components may be combined into or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electronic, mechanical, or other forms.

The units described as separate parts may or may not be physically separate, and parts displayed as units may or may not be physical units, may be at one location, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, an apparatus, or the like) to perform all or a part of the steps in the methods described in embodiments of this application. The foregoing storage medium includes any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending a first message, wherein the first message indicates a plurality of time units expected by a terminal device, the plurality of time units comprise M conflicting time units, and M is an integer greater than or equal to 2, wherein
when the first message comprises first indication information, the first message indicates to retain all of the M time units; and
receiving configuration information, wherein the configuration information is determined based on the first message.

2. The method according to claim 1, wherein the first indication information indicates to retain all of the M time units.

3. The method according to claim 1 or 2, wherein
when the first message does not comprise the first indication information, the first message indicates to retain a part of the M time units.

4. The method according to claim 3, wherein indicating to retain the part of the M time units comprises:
indicating to retain a time unit with a highest priority in the M time units, and indicating to discard all time units other than the time unit with the highest priority in the M time units.

5. The method according to claim 3, wherein indicating to retain the part of the M time units comprises:
indicating to retain the first N time units with higher priorities in the M time units, and indicating to discard all time units other than the first N time units with the higher priorities in the M time units, wherein N is an integer greater than or equal to 1 and less than or equal to M.

6. The method according to claim 3, wherein indicating to retain the part of the M time units comprises:
indicating to retain a time unit with a smallest periodicity in the M time units, and indicating to discard all time units other than the time unit with the smallest periodicity in the M time units.

7. The method according to claim 3, wherein indicating to retain the part of the M time units comprises:
indicating to retain the first L time units with smaller periodicities in the M time units, and indicating to discard all time units other than the first L time units with the smaller periodicities in the M time units, wherein L is an integer greater than or equal to 1 and less than or equal to M.

8. The method according to any one of claims 1 to 7, wherein the time unit is a multi-sim gap.

9. The method according to claim 4 or 5, wherein a priority is a priority of a time unit expected by the terminal device, or a priority is a priority of a time unit configured by a network device for the terminal device.

10. The method according to any one of claims 1 to 9, wherein before sending the first message, the method further comprises:
receiving a second message, wherein the second message indicates that sending of the first message is allowed.

11. The method according to any one of claims 2 to 10, wherein that the first indication information indicates to retain all of the M time units comprises:
the first indication information indicates that coexistence of all of the M time units is allowed.

12. The method according to any one of claims 1 to 11, wherein the first indication information comprises identifiers of all of the M time units.

13. A communication method, comprising:
receiving a first message, wherein the first message indicates a plurality of time units expected by a terminal device, the plurality of time units comprise M conflicting time units, and M is an integer greater than or equal to 2, wherein
when the first message comprises first indication information, the first message indicates to retain a part of the M time units, or the first indication information indicates to retain all of the M time units;
determining configuration information based on the first message; and
sending the configuration information.

14. The method according to claim 13, wherein the first indication information indicates to retain all of the M time units.

15. The method according to claim 13 or 14, wherein
when the first message does not comprise the first indication information, the first message indicates to retain a part of the M time units.

16. The method according to claim 15, wherein indicating to retain the part of the M time units comprises:
indicating to retain a time unit with a highest priority in the M time units, and indicating to discard all time units other than the time unit with the highest priority in the M time units.

17. The method according to claim 15, wherein indicating to retain the part of the M time units comprises:
indicating to retain the first N time units with higher priorities in the M time units, and indicating to discard all time units other than the first N time units with the higher priorities in the M time units, wherein N is an integer greater than or equal to 1 and less than or equal to M.

18. The method according to claim 15, wherein indicating to retain the part of the M time units comprises:
indicating to retain a time unit with a smallest periodicity in the M time units, and indicating to discard all time units other than the time unit with the smallest periodicity in the M time units.

19. The method according to claim 15, wherein indicating to retain the part of the M time units comprises:
indicating to retain the first L time units with smaller periodicities in the M time units, and indicating to discard all time units other than the first L time units with the smaller periodicities in the M time units, wherein L is an integer greater than or equal to 1 and less than or equal to M.

20. The method according to any one of claims 13 to 19, wherein the time unit is a multi-sim gap.

21. The method according to claim 17 or 18, wherein a priority is a priority of a time unit expected by the terminal device, or a priority is a priority of a time unit configured by a network device for the terminal device.

22. The method according to any one of claims 13 to 21, wherein before receiving the first message, the method further comprises:
sending a second message, wherein the second message indicates that sending of the first message is allowed.

23. The method according to any one of claims 14 to 22, wherein that the first indication information indicates to retain all of the M time units comprises:
the first indication information indicates that coexistence of all of the M time units is allowed.

24. The method according to any one of claims 13 to 23, wherein the first indication information comprises identifiers of all of the M time units.

25. A communication apparatus, configured to perform the method according to any one of claims 1 to 12, or configured to perform the method according to any one of claims 13 to 24.

26. A computer-readable storage medium, wherein the computer-readable storage medium is configured to store a computer program, and when the computer program is run on a computer, the computer is enabled to perform the method according to any one of claims 1 to 24.

27. A computer program product, wherein when the computer program product runs on a computer, the computer is enabled to perform the method according to any one of claims 1 to 24.
